# EUROPEAN PATENT APPLICATION

(11) **EP 4 553 625 A1**
(43) Date of publication of application: **14.05.2025**
(21) Application number: 23844935.9
(22) Date of filing: 27.04.2023
(51) Int. Cl.: G06F 3/041

(54) **DISPLAY CONTROL METHOD AND APPARATUS, AND MOBILE CARRIER**

(30) Priority: 29.07.2022 CN 202210904518
(71) Applicant: Shenzhen Yinwang Intelligent Technologies Co., Ltd., Shenzhen, Guangdong 518129 (CN)
(72) Inventor: LI, Ping, Shenzhen, Guangdong 518129 (CN); HUANG, Yinghua, Shenzhen, Guangdong 518129 (CN); LI, Qinglei, Shenzhen, Guangdong 518129 (CN)
(74) Representative: Maiwald GmbH
(86) International application number: PCT/CN2023/091297
(87) International publication number: WO 2024/021720

(57) **Abstract**

This application provides a display control method and apparatus, and a mobile carrier. The method may include: determining a first area of a user in a cabin; and controlling, based on the first area, a first display area to display a first interface element, where the first area corresponds to the first display area. The display control method in embodiments of this application may be applied to a new energy vehicle or an intelligent vehicle, to help improve greeting experience and driving experience of a user in using the cabin.

## Description

This application claims priority to Chinese Patent Application No. 202210904518.2, filed with the China National Intellectual Property Administration on July 29, 2022 and entitled "DISPLAY CONTROL METHOD AND APPARATUS, AND MOBILE CARRIER", which is incorporated herein by reference in its entirety.

### TECHNICAL FIELD

Embodiments of this application relate to the field of intelligent cabins, and more specifically, to a display control method and apparatus, and a mobile carrier.

### BACKGROUND

With improvement of vehicle intelligence and network connection, vehicle cabins gradually develop to intelligent cabins with man-machine interaction as the core and multi-screen linkage. In current intelligent cabins, multimedia experience of in-vehicle displays still needs to be improved.

### SUMMARY

Embodiments of this application provide a display control method and apparatus, and a mobile carrier, to help improve experience when a user uses a cabin.

The mobile carrier in this application may include a road transportation means, a water transportation means, an air transportation means, an industrial device, an agricultural device, an entertainment device, or the like. For example, the mobile carrier may be a vehicle. In a broad sense, the vehicle may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application. For another example, the mobile carrier may be a transportation means, for example, an airplane or a ship.

According to a first aspect, a display control method is provided. The device is disposed in a cabin in a mobile carrier. The method may be performed by the mobile carrier, or may be performed by a vehicle-mounted terminal in the mobile carrier, for example, a head unit, or may be performed by a chip or a circuit used in a vehicle-mounted terminal. This is not limited in this application. For ease of description, that the method is performed by the mobile carrier is used as an example for description below.

The method may include: detecting whether there is a user in a first area in the cabin, where the cabin is in a first state; and when detecting the user in the first area, controlling the cabin to be in a second state.

In the foregoing technical solution, when it is detected that there is a user in an area in the cabin, a status change of the cabin is controlled. This helps improve greeting experience of the user in using the cabin, and meets a requirement of the user in the area.

In some possible implementations, the cabin may include one or more in-vehicle displays; or the cabin may include in-vehicle fragrance, an in-vehicle air conditioner, an in-vehicle audio and video system, and the like; or the cabin may include another device. This is not specifically limited in embodiments of this application.

For example, that the cabin is in a first state may include at least one of the following: The in-vehicle display is in a screen-off state; the in-vehicle fragrance is in an off state, that is, the in-vehicle fragrance does not release fragrance; the in-vehicle air conditioner is in a power-off state; and the in-vehicle audio and video system is in a power-off state.

For example, when that the cabin is in a first state includes that the in-vehicle display is in a screen-off state, the controlling, when detecting the user in the first area in the cabin, the cabin to be in a second state may include: controlling a display in the first area to display an interface element. It should be noted that the display in the first area may include a display disposed in the first area. For example, when the first area is a driver area in the cabin, the display in the first area may be a screen for the driver, for example, a dashboard or a central display screen.

For example, when that the cabin is in a first state includes that the in-vehicle fragrance is in an off state, that is, the in-vehicle fragrance does not release fragrance, the controlling the cabin to be in a second state may include: controlling the in-vehicle fragrance to be on, that is, the in-vehicle fragrance starting to release the fragrance.

For example, when that the cabin is in a first state includes that the in-vehicle air conditioner is in a power-off state, the controlling the cabin to be in a second state may include: controlling the in-vehicle air conditioner to be turned on. In some possible implementations, an in-vehicle air conditioner in the first area may be controlled to be turned on. It should be understood that the in-vehicle air conditioner in the first area may include an in-vehicle air conditioner disposed in the first area. For example, when the first area is a driver area in the cabin, the in-vehicle air conditioner in the first area may be an air conditioner for the driver seat.

For example, when that the cabin is in a first state includes that the in-vehicle audio and video system is in a power-off state, the controlling the cabin to be in a second state may include: controlling the in-vehicle audio and video system to be enabled. For example, when the in-vehicle audio and video system is enabled, audio such as music or a radio channel may be played.

In some possible implementations, when it is detected that there is the user in the first area, controlling the cabin to switch from the first state to the second state may include one of the foregoing examples, or may be a combination of the foregoing two or more examples. In an example, the first state of the cabin includes that the cabin is in a state in which a display for a driver seat is screen-off and an in-vehicle fragrance is in an off state, and the second state of the cabin may include that the in-vehicle fragrance is controlled to be on and the display for the driver seat is controlled to display an interface element. In another example, the first state of the cabin includes that the cabin is in a state in which a display for a driver seat is screen-off, an in-vehicle fragrance is in an off state, and an in-vehicle air conditioner is in a tuned-off state, and the second state of the cabin may include that the in-vehicle fragrance is controlled to be on, the in-vehicle air conditioner is controlled to be turned on, and the display for the driver seat is controlled to display an interface element.

With reference to the first aspect, in some implementations of the first aspect, the method further includes: detecting whether there is the user in the first area in the cabin, where a first display area in the cabin is in a screen-off state, and the first display area corresponds to the first area; and when detecting the user in the first area, controlling the first display area to switch from the screen-off state to displaying an interface element.

In some possible implementations, the first display area may be a display in an area in the cabin, for example, a central display screen for a driver, or a front passenger entertainment screen, or may be a screen on the rear of a head restrain of a front-row seat; or the first display area may be an area on a display, for example, when a central display screen and a front passenger entertainment screen are combined into a same long screen, the first display area may be an area on the long screen.

In some possible implementations, the screen-off state may include a black screen state, for example, a black screen state when the display is powered off; or may include a turning-off state of the display in a low power consumption state such as a sleep state, a standby state, or a shutdown state. The turning-off state may include displaying a sleep display interface. For example, when the display is turned off, a self-luminous feature of the display is used, some areas on the display can be lit up to display information such as a clock, a date, a notification, and an animation, so that the user can view related information when the display is turned off. In an example, before entering the cabin, the user controls the cabin to be powered on, but an in-vehicle screen may still be in a power-off state. Further, after the user enters the cabin, an in-vehicle screen or an area that is on an in-vehicle screen and that corresponds to a cabin location in which the user is located is powered on and displays an interface element.

In the foregoing technical solution, after the user is detected, the in-vehicle screen corresponding to the area in which the user is located or the area on the in-vehicle screen displays the interface element. This helps reduce energy consumption and improve interaction experience when the user uses the in-vehicle screen. In addition, when users are detected in different areas in the cabin, different display areas may display different interface elements, to meet requirements of different users.

With reference to the first aspect, in some implementations of the first aspect, the method further includes: controlling, based on a human body feature of the user, the first display area to display the interface element.

For example, the human body feature includes but is not limited to a gender, an age, a mood, and the like.

In some possible implementations, a type of the interface element displayed in the first display area is determined based on a gender of the user. For example, when the user is a female user, the first display area may be controlled to display interface elements preferred by the one or more female users; or when the user is a male user, the first display area may be controlled to display interface elements preferred by the one or more male users.

In some possible implementations, a type of the interface element displayed in the first display area is determined based on an age of the user. For example, when the user is a juvenile user, the first display area may be controlled to display interface elements preferred by the one or more juvenile users; or when the user is an elderly user, the first display area may be controlled to display interface elements preferred by the one or more elderly users.

In some possible implementations, a type of the interface element displayed in the first display area is determined based on a mood of the user. For example, when the user is in a low mood, the first display area may be controlled to display one or more entertainment-related interface elements.

In some possible implementations, the "interface element preferred by the male user", the "interface element preferred by the female user", the "interface element preferred by the juvenile user", and the "interface element preferred by the elderly user" may be set by the user, or may be set during delivery of the mobile carrier, or may be set in another manner. This is not specifically limited in embodiments of this application.

In the foregoing technical solution, personalized interface elements can be pushed to different users based on human body features of the users. This helps improve entertainment experience of the users.

With reference to the first aspect, in some implementations of the first aspect, the method further includes: controlling, based on identity information of the user, the first display area to display the interface element.

For example, the identity information includes but is not limited to biometric feature information, an account, and the like stored in the mobile carrier. The biometric feature information includes but is not limited to fingerprint information, palm print information, face information, iris information, and gait information. The account may include account information for logging in to an in-vehicle infotainment system, and the like.

In some possible implementations, the first display area displays the interface element associated with the identity information of the user. For example, when the user appears in a driver area, the cabin displays the interface element associated with the user on a display for a driver seat; or when the user appears in a front passenger area, the cabin displays the interface element associated with the user on a front passenger entertainment screen. It should be understood that the interface element associated with the user may be preset by the user, or may be arranged by the cabin based on a frequency of using an application by the user in a specific time period.

In the foregoing technical solution, the type of the displayed interface element is determined based on the identity information of the user. When a location of the user in the cabin changes, the interface element associated with the user may be displayed on a display in an area to which the user moves. This helps improve interaction experience and driving experience of the user.

With reference to the first aspect, in some implementations of the first aspect, the method further includes: controlling, based on travel status information of the mobile carrier, the first display area to display the interface element, where the mobile carrier includes the cabin.

In some possible implementations, when the mobile carrier is in a traveling state, a display area for a driver seat may be controlled to display a driving-type interface element, for example, an icon of a maps-type application or a navigation-type widget; or when the mobile carrier is in a parking state, a display area for a driver seat may be controlled to display an entertainment-type interface element, for example, an icon of a video-type application or a music-type widget.

In some possible implementations, when the mobile carrier is in the traveling state, the driving-type interface element displayed in the display area for the driver seat may be determined based on the identity information of the user, or may be determined based on the human body feature of the user; or when the mobile carrier is in the parking state, the entertainment-type interface element displayed in the display area for the driver seat may be determined based on the identity information of the user, or may be determined based on the human body feature of the user.

It should be understood that, when the mobile carrier is in the traveling state, the display area for the driver seat may further display an interface element other than the driving-type interface element, for example, an icon of a communication-type application; or when the mobile carrier is in the parking state, the display area for the driver seat may further display an interface element other than the entertainment-type interface element, for example, an icon of a maps-type application.

In the foregoing technical solution, in a traveling process of the mobile carrier, the display area for the driver seat mainly displays a driving-related interface element. This helps improve traveling safety. When the mobile carrier is in different states, different interface elements are displayed. This helps improve interaction experience of the user.

With reference to the first aspect, in some implementations of the first aspect, the interface element includes one or more tabs, and the method further includes: when detecting an input of the user for a first tab displayed in the first display area, controlling the first display area to display icons of one or more applications, where the one or more tabs include the first tab, and the first tab includes the icons of the one or more applications.

For example, the input of the user for the first tab displayed in the first display area may be an operation of tapping the first tab, or may be a speech instruction for the first tab, for example, "open the first tab"; or may be a preset gesture for the first tab; or may be an operation for the first tab in another form. This is not specifically limited in embodiments of this application.

In the foregoing technical solution, icons of more applications are displayed in a tab form, and after the user selects a specific tab, an icon of an application in the tab is pushed, so that icons of more selectable applications can be provided for the user when fewer computing resources are occupied. This helps improve user experience.

With reference to the first aspect, in some implementations of the first aspect, the icons of the one or more applications included in the first tab are icons of applications of a same type.

For example, the icons of the applications included in the first tab may be edited by the user by using a setting function. For example, icons of a financial management-type application, a sports-type application, a work-type application, and a learning-type application are set on a "financial management" tab, a "sports" tab, a "work" tab, and a "learning" tab respectively. Alternatively, a name of the tab and an icon of an application included in each tab may be set during delivery of the mobile carrier. This is not specifically limited in embodiments of this application.

In the foregoing technical solution, classified tabs are displayed, so that the user can quickly select a required application. This helps reduce time required by the user to select an application, and improve driving experience of the user.

With reference to the first aspect, in some implementations of the first aspect, the method further includes: when detecting an input of the user for the first display area, controlling the first display area to switch from the screen-off state to displaying the interface element.

In some possible implementations, after entering the cabin, the user may not want to use the in-vehicle screen, and may control the in-vehicle screen or an area that is on the in-vehicle screen and that corresponds to a location of the user to be in a sleep display interface. When the user wants to use the in-vehicle screen, the user controls, by using the input for the first display area, the first display area to display the interface element.

For example, the sleep display interface may be an interface displayed when the in-vehicle screen sleeps, for example, a static or dynamic wallpaper, or may be a sleep display interface in another form. This is not specifically limited in embodiments of this application.

For example, the input of the user for the first display area may be an operation of tapping the first display area, or may be a speech instruction for the first display area, for example, "open the first display area;" or may be a preset gesture for the first display area; or may be an operation in another form for the first display area. This is not specifically limited in embodiments of this application.

In some possible implementations, the screen-off state of the in-vehicle screen is a power-off state, and the sleep display interface is a power-on state. In some possible implementations, both the screen-off state and a sleep display state of the in-vehicle screen may be a black screen state, that is, no information is displayed. However, it should be understood that, in the sleep display state, the in-vehicle screen may immediately switch, in response to a tap operation or a speech instruction of the user, to displaying one or more interfaces. However, when the in-vehicle screen is in the screen-off state, the in-vehicle screen does not display one or more interfaces after the screen is touched or a speech instruction is input.

In the foregoing technical solution, whether the in-vehicle screen displays the interface element can be controlled based on selection and/or an operation of the user. This not only helps reduce energy consumption, but also can improve interaction experience when the user uses the in-vehicle screen.

With reference to the first aspect, in some implementations of the first aspect, the cabin includes a first display, the first display includes the first display area and a second display area, the second display area corresponds to a second area in the cabin, and the method further includes: when no user is detected in the second area, controlling the second display area to be in a screen-off state; or when a user is detected in the second area, controlling the second display area to display an interface element.

In some possible implementations, when the first display is a long screen that can extend to the driver area and the front passenger area, the first display area and the second display area may be respectively a display area in the driver area (the first area) and a display area in the front passenger area (the second area) on the long screen. In this case, when there is the user in the driver area, the first display area, namely, an area of the long screen at the driver seat may be controlled to display the interface element; and when there is no user in the front passenger area, the second display area, namely, an area of the long screen at the front passenger seat may be controlled to be screen-off; or when there is the user in the front passenger area, the second display area may be controlled to display the interface element. It should be understood that the interface element may be the same as or different from the interface element displayed in the first display area. This is not specifically limited in embodiments of this application.

In the foregoing technical solution, partition-based control is performed on the in-vehicle long screen, to help reduce energy consumption in a process of using the in-vehicle long screen.

With reference to the first aspect, in some implementations of the first aspect, the interface element further includes at least one of a widget, an icon of an application, a wallpaper, and an animation.

With reference to the first aspect, in some implementations of the first aspect, the cabin includes an in-vehicle fragrance, and that the cabin is in a first state includes that the in-vehicle fragrance is in a release-stopped state; and the controlling the cabin to be in a second state includes: controlling the in-vehicle fragrance to be on.

With reference to the first aspect, in some implementations of the first aspect, the cabin includes an in-vehicle air conditioner, and that the cabin is in a first state includes that the in-vehicle air conditioner is in a power-off state; and the controlling the cabin to be in a second state includes: controlling the in-vehicle air conditioner to be turned on.

With reference to the first aspect, in some implementations of the first aspect, the cabin includes an in-vehicle audio and video system, and that the cabin is in a first state includes that the in-vehicle audio and video system is in a power-off state; and the controlling the cabin to be in a second state includes: controlling the in-vehicle audio and video system to be enabled.

In the foregoing technical solution, when it is detected that the user enters the cabin, the in-vehicle fragrance is on, the in-vehicle air conditioner is turned on, and the in-vehicle audio and video system is enabled. This helps further improve greeting experience of the user in using the cabin.

With reference to the first aspect, in some implementations of the first aspect, the method further includes: obtaining resource occupation information, where the resource occupation information represents a resource capacity allocated to the first display area; and controlling, based on the resource occupation information, the first display area to display the interface element.

In the foregoing technical solution, when it is detected that the resource capacity allocated to the first display area is small, the first display area may be controlled to display a small quantity of interface elements. This helps reduce resource occupation when the first display area performs display.

According to a second aspect, a display control method is provided. The method may include: when detecting that a first user is located in a first area in a cabin, controlling, based on a human body feature or identity information of the first user, a first display area in the cabin to display a first interface element, where the first area corresponds to the first display area.

In the foregoing technical solution, a type of an interface element may be determined based on a human body feature or identity information of a user, that is, personalized interface elements are recommended based on different users. This helps improve interaction experience, driving experience, and entertainment experience of the user.

With reference to the second aspect, in some implementations of the second aspect, the method further includes: when detecting that the first user is located in a second area in the cabin, controlling a second display area in the cabin to display the first interface element, where the second area corresponds to the second display area.

In the foregoing technical solution, when a location of the first user changes, a location at which the first user is currently located may be controlled to control a display area corresponding to the location to display the first interface element, without manual adjustment of the user. This helps improve driving experience of the user.

With reference to the second aspect, in some implementations of the second aspect, the controlling, based on a human body feature or identity information of the first user, a first display area in the cabin to display a first interface element includes: controlling, based on travel status information of a mobile carrier and the human body feature or the identity information of the first user, the first display area in the cabin to display the first interface element, where the mobile carrier includes the cabin.

In the foregoing technical solution, the type of the interface element may be determined based on the travel status information of the mobile carrier. For example, when the user is in driver's seat and the mobile carrier is in a traveling state, it is determined that the interface element is a driving assistance-related interface element. This helps improve traveling safety. The driving assistance-related interface element is associated with the human body feature or the identity information of the user, without manual selection of the user. This improves intelligence of the mobile carrier, and helps improve driving experience of the user.

With reference to the second aspect, in some implementations of the second aspect, the method further includes: when detecting that a second user is located in the second area, controlling, based on a human body feature or identity information of the second user, the second display area to display a second interface element.

With reference to the second aspect, in some implementations of the second aspect, the method further includes: when detecting that the second user is located in the first area and the first user is located in the second area, controlling the first display area to display the second interface element, and controlling the second display area to display the first interface element.

In the foregoing technical solution, after areas in which the first user and the second user are located change, display areas in which the first interface element and the second interface element are located may be correspondingly adjusted, without manual adjustment of the user. This helps improve intelligence of the mobile carrier, and improve driving experience of the user.

With reference to the second aspect, in some implementations of the second aspect, the controlling, based on a human body feature or identity information of the first user, a first display area to display a first interface element includes: controlling, based on the human body feature or the identity information of the first user, the first display area to switch from a screen-off state to displaying the first interface element.

With reference to the second aspect, in some implementations of the second aspect, the first interface element includes one or more tabs, and the method further includes: when detecting an input of the first user for a first tab displayed in the first display area, controlling the first display area to display icons of one or more applications, where the one or more tabs include the first tab, and the first tab includes the icons of the one or more applications.

With reference to the second aspect, in some implementations of the second aspect, the method further includes: when detecting an input of the first user for the first display area, controlling the first display area to switch from the screen-off state to displaying the first interface element.

With reference to the second aspect, in some implementations of the second aspect, the cabin includes a first display, the first display includes the first display area and the second display area, the second display area corresponds to the second area in the cabin, and the method further includes: when no user is detected in the second area, controlling the second display area to be in a screen-off state; or when a user is detected in the second area, controlling the second display area to display the interface element.

With reference to the second aspect, in some implementations of the second aspect, the first interface element further includes at least one of a widget, an icon of an application, a wallpaper, and an animation.

According to a third aspect, a display control method is provided. The method includes: determining a first area of a user in a cabin; and controlling, based on the first area, a first display area to display a first interface element, where the first area corresponds to the first display area.

In the foregoing technical solution, when it is detected that there is a user in an area in the cabin, a display area in the area is controlled to display an interface element. This helps improve greeting experience of the user in using the cabin, and meets a requirement of the user in the area.

With reference to the third aspect, in some implementations of the third aspect, the first display area is a central display screen, and the first area is any area in the cabin.

In some possible implementations, when a user is detected in any area in the cabin, a central display screen corresponding to a driver area is controlled to display icons of all applications installed on a mobile carrier.

With reference to the third aspect, in some implementations of the third aspect, the controlling a first display area to display a first interface element includes: controlling, based on a human body feature or identity information of the user, the first display area to display the first interface element.

In the foregoing technical solution, the first display area is controlled based on the human body feature of the user, to pertinently display an interface element, so that the user can conveniently view, in the first display area, the interface element that the user is interested in. This helps improve interaction experience of the user. The first display area is controlled based on the identity information of the user, to pertinently display an interface element, so that the user can conveniently view, in the first display area, the interface element related to the user, and the user can conveniently perform an operation on the interface element in the first display area. This helps improve intelligence of the mobile carrier, and improve driving experience of the user.

With reference to the third aspect, in some implementations of the third aspect, the first area is a front passenger area in the cabin or a rear-row area in the cabin.

For example, if there is a five-seat vehicle, the rear-row area may be a second-row area of the vehicle; or if there are a seven-seat vehicle, the rear-row area may be a second-row area and/or a third-row area. For another vehicle with many seats, the rear-row area may further include a rear-row area other than a driver area and a front passenger area.

With reference to the third aspect, in some implementations of the third aspect, the method further includes: when there is no user in the first area, controlling the first display area to be in a screen-off state.

In the foregoing technical solution, when there is no user in the first area, an in-vehicle screen in the area or an area on an in-vehicle screen is controlled to be in the screen-off state. This helps reduce energy consumption.

With reference to the third aspect, in some implementations of the third aspect, the controlling a first display area to display a first interface element includes: controlling, based on travel status information of a mobile carrier, the first display area to display the first interface element, where the mobile carrier includes the cabin.

In the foregoing technical solution, in a traveling process of the mobile carrier, a display area for a driver seat mainly displays a driving-type-related interface element. This helps improve traveling safety.

With reference to the third aspect, in some implementations of the third aspect, the first interface element includes one or more tabs, and the method further includes: when detecting an input of the user for a first tab displayed in the first display area, controlling the first display area to display icons of one or more applications, where the one or more tabs include the first tab, and the first tab includes the icons of the one or more applications.

In the foregoing technical solution, icons of more applications are displayed in a tab form, and after the user selects a specific tab, an icon of an application in the tab is pushed, so that icons of more selectable applications can be provided for the user when fewer computing resources are occupied. This helps improve user experience.

With reference to the third aspect, in some implementations of the third aspect, the icons of the one or more applications included in the first tab are icons of applications of a same type.

In the foregoing technical solution, classified tabs are displayed, so that the user can quickly select a required application. This helps reduce time required by the user to select an application, and improve driving experience of the user.

With reference to the third aspect, in some implementations of the third aspect, the cabin includes a first display, the first display includes the first display area and a second display area, the second display area corresponds to a second area in the cabin, and the method further includes: when no user is detected in the second area, controlling the second display area to be in a screen-off state; or when a user is detected in the second area, controlling the second display area to display a second interface element.

With reference to the third aspect, in some implementations of the third aspect, the cabin includes a third display area, the third display area corresponds to a third area in the cabin, and the method further includes: when a user is detected in the third area, controlling the third display area to display a third interface element.

With reference to the third aspect, in some implementations of the third aspect, the first interface element further includes at least one of a widget, an icon of an application, a wallpaper, and an animation.

According to a fourth aspect, a display control apparatus is provided. The apparatus includes: a detection unit, configured to detect whether there is a user in a first area in a cabin, where the cabin is in a first state; and a processing unit, configured to: when the user is detected in the first area, control the cabin to be in a second state.

With reference to the fourth aspect, in some implementations of the fourth aspect, whether there is the user in the first area in the cabin is detected, where a first display area in the cabin is in a screen-off state, and the first display area corresponds to the first area; and when the user is detected in the first area, the first display area is controlled to switch from the screen-off state to displaying an interface element.

With reference to the fourth aspect, in some implementations of the fourth aspect, the processing unit is specifically configured to: control, based on a human body feature of the user, the first display area to display the interface element.

With reference to the fourth aspect, in some implementations of the fourth aspect, the processing unit is specifically configured to: control, based on identity information of the user, the first display area to display the interface element.

With reference to the fourth aspect, in some implementations of the fourth aspect, the processing unit is specifically configured to: control, based on travel status information of a mobile carrier, the first display area to display the interface element, where the mobile carrier includes the cabin.

With reference to the fourth aspect, in some implementations of the fourth aspect, the interface element includes one or more tabs, and the processing unit is further configured to: when the detection unit detects an input of the user for a first tab displayed in the first display area, control the first display area to display icons of one or more applications, where the one or more tabs include the first tab, and the first tab includes the icons of the one or more applications.

With reference to the fourth aspect, in some implementations of the fourth aspect, the icons of the one or more applications included in the first tab are icons of applications of a same type.

With reference to the fourth aspect, in some implementations of the fourth aspect, the processing unit is specifically configured to: when the detection unit detects an input of the user for the first display area, control the first display area to switch from the screen-off state to displaying the interface element.

With reference to the fourth aspect, in some implementations of the fourth aspect, the cabin includes a first display, the first display includes the first display area and a second display area, the second display area corresponds to a second area in the cabin, and the processing unit is further configured to: when the detection unit detects no user in the second area, control the second display area to be in a screen-off state; or when the detection unit detects a user in the second area, control the second display area to display an interface element.

With reference to the fourth aspect, in some implementations of the fourth aspect, the interface element further includes at least one of a widget, an icon of an application, a wallpaper, and an animation.

With reference to the fourth aspect, in some implementations of the fourth aspect, the cabin includes an in-vehicle fragrance, and that the cabin is in a first state includes that the in-vehicle fragrance is in a release-stopped state; and the processing unit is specifically configured to: control the in-vehicle fragrance to be on.

With reference to the fourth aspect, in some implementations of the fourth aspect, the cabin includes an in-vehicle air conditioner, and that the cabin is in a first state includes that the in-vehicle air conditioner is in a power-off state; and the processing unit is specifically configured to: control the in-vehicle air conditioner to be turned on.

With reference to the fourth aspect, in some implementations of the fourth aspect, the cabin includes an in-vehicle audio and video system, and that the cabin is in a first state includes that the in-vehicle audio and video system is in a power-off state; and the processing unit is specifically configured to: control the in-vehicle audio and video system to be enabled.

With reference to the fourth aspect, in some implementations of the fourth aspect, the apparatus further includes: an obtaining unit, configured to obtain resource occupation information, where the resource occupation information represents a resource capacity allocated to the first display area; and the processing unit is further configured to control, based on the resource occupation information, the first display area to display the interface element.

According to a fifth aspect, a display control apparatus is provided. The apparatus may include: a processing unit, configured to: when a detection unit detects that a first user is located in a first area in a cabin, control, based on a human body feature or identity information of the first user, a first display area in the cabin to display a first interface element, where the first area corresponds to the first display area.

With reference to the fifth aspect, in some implementations of the fifth aspect, the processing unit is further configured to: when the detection unit detects that the first user is located in a second area in the cabin, control a second display area in the cabin to display the first interface element, where the second area corresponds to the second display area.

With reference to the fifth aspect, in some implementations of the fifth aspect, the processing unit is further configured to: control, based on travel status information of a mobile carrier and the human body feature or the identity information of the first user, the first display area in the cabin to display the first interface element, where the mobile carrier includes the cabin.

With reference to the fifth aspect, in some implementations of the fifth aspect, the processing unit is further configured to: when the detection unit detects that a second user is located in the second area, control, based on a human body feature or identity information of the second user, the second display area to display a second interface element.

With reference to the fifth aspect, in some implementations of the fifth aspect, the processing unit is further configured to: when the detection unit detects that the second user is located in the first area and the first user is located in the second area, control the first display area to display the second interface element, and control the second display area to display the first interface element.

With reference to the fifth aspect, in some implementations of the fifth aspect, the processing unit is specifically configured to: control, based on the human body feature or the identity information of the first user, the first display area to switch from a screen-off state to displaying the first interface element.

With reference to the fifth aspect, in some implementations of the fifth aspect, the first interface element includes one or more tabs, and the processing unit is specifically configured to: when an input of the first user for a first tab displayed in the first display area is detected, control the first display area to display icons of one or more applications, where the one or more tabs include the first tab, and the first tab includes the icons of the one or more applications.

With reference to the fifth aspect, in some implementations of the fifth aspect, the processing unit is further configured to: when it is detected that an input of the first user for the first display area, control the first display area to switch from the screen-off state to displaying the first interface element.

With reference to the fifth aspect, in some implementations of the fifth aspect, the cabin includes a first display, the first display includes the first display area and the second display area, the second display area corresponds to the second area in the cabin, and the processing unit is further configured to: when no user is detected in the second area, control the second display area to be in a screen-off state; or when a user is detected in the second area, control the second display area to display an interface element.

With reference to the fifth aspect, in some implementations of the fifth aspect, the first interface element further includes at least one of a widget, an icon of an application, a wallpaper, and an animation.

According to a sixth aspect, a display control apparatus is provided. The apparatus includes: a determining unit, configured to determine a first area of a user in a cabin; and a processing unit, configured to control, based on the first area, a first display area to display a first interface element, where the first area corresponds to the first display area.

With reference to the sixth aspect, in some implementations of the sixth aspect, the first display area is a central display screen, and the first area is any area in the cabin.

With reference to the sixth aspect, in some implementations of the sixth aspect, the processing unit is configured to: control, based on a human body feature or identity information of the user, the first display area to display the first interface element.

With reference to the sixth aspect, in some implementations of the sixth aspect, the first area is a front passenger area in the cabin or a rear-row area in the cabin.

With reference to the sixth aspect, in some implementations of the sixth aspect, the processing unit is further configured to: when there is no user in the first area, control the first display area to be in a screen-off state.

With reference to the sixth aspect, in some implementations of the sixth aspect, the processing unit is configured to: control, based on travel status information of a mobile carrier, the first display area to display the first interface element, where the mobile carrier includes the cabin.

With reference to the sixth aspect, in some implementations of the sixth aspect, the apparatus further includes a detection unit, the first interface element includes one or more tabs, and the processing unit is further configured to: when the detection unit detects an input of the user for a first tab displayed in the first display area, control the first display area to display icons of one or more applications, where the one or more tabs include the first tab, and the first tab includes the icons of the one or more applications.

With reference to the sixth aspect, in some implementations of the sixth aspect, the icons of the one or more applications included in the first tab are icons of applications of a same type.

With reference to the sixth aspect, in some implementations of the sixth aspect, the apparatus further includes the detection unit, the cabin includes a first display, the first display includes the first display area and a second display area, the second display area corresponds to a second area in the cabin, and the processing unit is further configured to: when the detection unit detects no user in the second area, control the second display area to be in a screen-off state; or when the detection unit detects a user in the second area, control the second display area to display a second interface element.

With reference to the sixth aspect, in some implementations of the sixth aspect, the apparatus further includes the detection unit, the cabin includes a third display area, the third display area corresponds to a third area in the cabin, and the processing unit is configured to: when the detection unit detects a user in the third area, control the third display area to display a third interface element.

With reference to the sixth aspect, in some implementations of the sixth aspect, the first interface element further includes at least one of a widget, an icon of an application, a wallpaper, and an animation.

According to a seventh aspect, a display control apparatus is provided. The apparatus includes: a memory, configured to store a program; and a processor, configured to execute the program stored in the memory. When the program stored in the memory is executed, the processor is configured to perform the method according to any one of the possible implementations of the first aspect or the third aspect.

According to an eighth aspect, a mobile carrier is provided. The mobile carrier includes the apparatus according to any one of the possible implementations of the fourth aspect to the seventh aspect.

With reference to the eighth aspect, in some implementations of the eighth aspect, the mobile carrier is a vehicle.

According to a ninth aspect, a computer program product is provided. The computer program product includes computer program code. When the computer program code is run on a computer, the computer is enabled to perform the method according to any one of the possible implementations of the first aspect or the third aspect.

It should be noted that all or a part of the computer program code may be stored in a first storage medium. The first storage medium may be encapsulated together with a processor, or may be encapsulated separately from a processor. This is not specifically limited in embodiments of this application.

According to a tenth aspect, a computer-readable medium is provided. The computer-readable medium stores instructions. When the instructions are executed by a processor, the processor is enabled to implement the method according to any one of the possible implementations of the first aspect or the third aspect.

According to an eleventh aspect, a chip is provided. The chip includes a processor configured to invoke a computer program or computer instructions stored in a memory, so that the processor performs the method according to any one of the possible implementations of the first aspect or the third aspect.

With reference to the eleventh aspect, in a possible implementation, the processor is coupled to the memory through an interface.

With reference to the eleventh aspect, in a possible implementation, the chip further includes the memory. The memory stores the computer program or computer instructions.

In embodiments of this application, the display control method and apparatus, and the mobile carrier provided in embodiments can be used to control a status change of the cabin when it is detected that there is the user in the cabin. This helps improve greeting experience of the user in using the cabin, and can further reduce energy consumption of a device in the cabin. In a current intelligent cabin, each in-vehicle screen supports display of only a small quantity of applications (applications, App) and/or widgets, and the displayed applications, widgets, and the like are fixed. As a result, in an actual use process of a user, space for selection is small, and driving experience of the user is poor. In embodiments of this application, when it is detected that there is a user in an area in the cabin, a display in the cabin area or a display area in the cabin area is controlled to display an interface element. This helps improve greeting experience of the user. Further, when users are detected in different areas in the cabin, different display areas may display different interface elements, to meet requirements of different users. Specifically, the type of the interface element may be determined based on the human body feature or the identity information of the user, or the type of the interface element may be determined with reference to a travel status of the mobile carrier, that is, personalized interface elements are recommended based on different users. This further improves interaction experience, driving experience, and entertainment experience of the user. After entering the cabin, the user may not want to use the in-vehicle screen, and in this case may control the in-vehicle screen or an area that is on the in-vehicle screen and that corresponds to a location of the user to be in a sleep display interface. When the user wants to use the in-vehicle screen, the user controls, by using the input for the first display area, the first display area to display the interface element. That is, whether the in-vehicle screen displays the interface element can be controlled based on selection and/or an operation of the user. This not only helps reduce energy consumption, but also can improve interaction experience when the user uses the in-vehicle screen. When there are a plurality of users in the cabin, different interface elements may be displayed, based on human body features or identity information of the different users and/or the travel status of the mobile carrier, on displays corresponding to locations of different users. This helps provide different selections for different users. When the interface element includes one or more tabs, a specific type of a displayed icon of an application may be determined based on a tab selected by the user, so that icons of more selectable applications can be provided for the user when fewer computing resources are occupied. This helps improve user experience.

### BRIEF DESCRIPTION OF DRAWINGS

FIG. 1 is a functional block diagram of a vehicle according to an embodiment of this application;
FIG. 2 is a diagram of a vehicle cabin scenario according to an embodiment of this application;
FIG. 3(a) to FIG. 3(c) are a block diagram of a display control system according to an embodiment of this application;
FIG. 4 is another block diagram of a display control system according to an embodiment of this application;
FIG. 5(a)-1 to FIG. 5(c)-2 are a diagram of an application scenario of a display control method according to an embodiment of this application;
FIG. 6(a)-1 to FIG. 6(c)-2 are another diagram of an application scenario of a display control method according to an embodiment of this application;
FIG. 7(a)-1 to FIG. 7(d)-3 are another diagram of an application scenario of a display control method according to an embodiment of this application;
FIG. 8(a)-1 to FIG. 8(b)-2 are another diagram of an application scenario of a display control method according to an embodiment of this application;
FIG. 9(a)-1 to FIG. 9(b)-2 are another diagram of an application scenario of a display control method according to an embodiment of this application;
FIG. 10(a)-1 to FIG. 10(b)-2 are another diagram of an application scenario of a display control method according to an embodiment of this application;
FIG. 11(a)-1 to FIG. 11(d)-2 are another diagram of an application scenario of a display control method according to an embodiment of this application;
FIG. 12 is a schematic flowchart of a display control method according to an embodiment of this application;
FIG. 13 is a schematic flowchart of a display control method according to an embodiment of this application;
FIG. 14 is a schematic flowchart of a display control method according to an embodiment of this application;
FIG. 15 is a schematic flowchart of a display control method according to an embodiment of this application;
FIG. 16 is a block diagram of a display control apparatus according to an embodiment of this application;
FIG. 17 is a block diagram of a display control apparatus according to an embodiment of this application; and
FIG. 18 is a block diagram of a display control apparatus according to an embodiment of this application.

### DESCRIPTION OF EMBODIMENTS

The following describes technical solutions in embodiments of this application with reference to accompanying drawings in embodiments of this application.

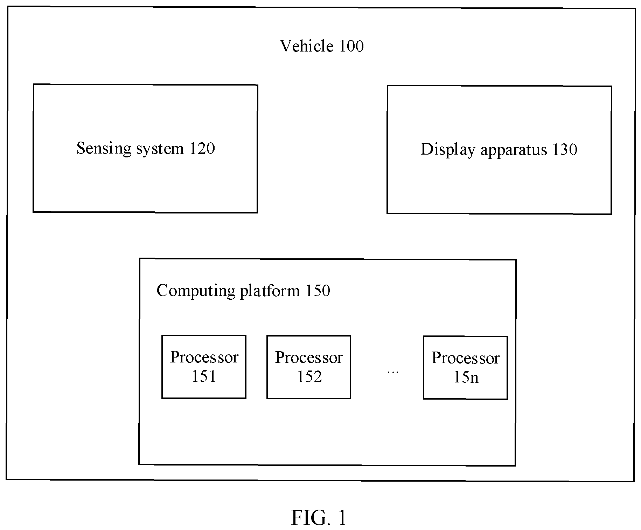

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system. The positioning system may be a global positioning system (global positioning system, GPS), or may be a BeiDou system, another positioning system, an inertial measurement unit (inertial measurement unit, IMU), a lidar, a millimeter-wave radar, an ultrasonic radar, and one or more of camera apparatuses. The sensing system 120 may further include a pressure sensor, disposed under a seat and configured to detect whether there is a user in the seat. The sensing system 120 may further include a sound wave sensor, configured to detect audio information in a cabin.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The display apparatus 130 in the cabin is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cabin, for example, a digital dashboard display, a central display screen, a display in front of a passenger in a front passenger seat (also referred to as a front-row passenger), a display in front of a rear-seat passenger on the left, and a display in front of a rear-seat passenger on the right. Even a window may be used as a display for display. Head-up display, also referred to as a head-up display system. The head-up display is mainly configured to display driving information such as a speed and navigation on a display device (for example, a windshield) in front of a driver, to reduce gaze transfer time of the driver, avoid a pupil change caused by gaze transfer of the driver, and improve driving safety and comfort. For example, the HUD includes a combiner-head-up display (combiner-HUD, C-HUD) system, a windshield-head-up display (windshield-HUD, W-HUD) system, and an augmented reality-head-up display (augmented reality-HUD, AR-HUD) system.

In this embodiment of this application, the processor may obtain pressure information of a seat, face information of a user, the audio information, and the like that are detected by the sensing system 120, and further control, based on at least one of the pressure information of the seat, the face information of the user, and the audio information, an icon of an application and/or a widget displayed on the display apparatus 130. In some possible implementations, information such as the pressure information of the seat, the face information of the user, and the audio information may alternatively be stored in the memory in the computing platform 150 in a form of data.

It should be understood that the foregoing operations may be performed by a same processor, or may be performed by one or more processors. This is not specifically limited in embodiments of this application.

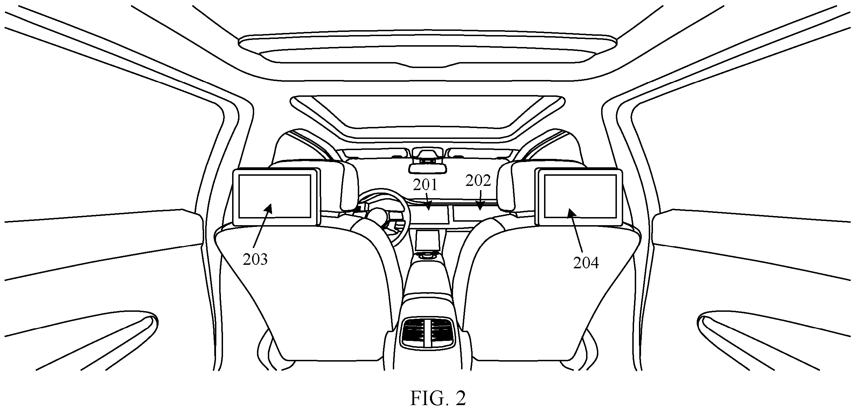

FIG. 2 is a diagram of a vehicle cabin scenario according to an embodiment of this application. One or more in-vehicle displays (or referred to as in-vehicle screens) are disposed in an intelligent cabin, including but not limited to a display 201 (or may be referred to as a central display screen), a display 202 (or may be referred to as a front passenger entertainment screen), a display 203 (or may be referred to as a screen on the rear of a head restrain of a driver), a display 204 (or may be referred to as a screen on the rear of a head restrain of a front passenger), and an instrument display screen. In some possible implementations, the display 201 may alternatively be a long screen extending to a front passenger area. One or more cameras may be installed in the cabin shown in FIG. 2, and configured to capture an image inside or outside the cabin, for example, a camera of a driver monitor system (driver monitor system, DMS), a camera of a cabin monitor system (cabin monitor system, CMS), and a camera of a dashcam (dashcam). Cameras configured to capture images inside and outside the cabin may be a same camera, or may be different cameras. In addition, one or more pressure sensors and sound wave sensors are further disposed in the cabin, to monitor whether there is a user in the cabin and a location of the user. Further, the displays 201 to 204 may display a graphical user interface (graphical user interface, GUI), and the GUI may include icons of one or more applications and/or one or more widgets.

It should be understood that a display control method in the following embodiments is described by using a five-seat vehicle shown in FIG. 2 as an example. This is not limited in embodiments of this application. For example, a cabin of a seven-seat sport utility vehicle (sport/suburban utility vehicle, SUV) may include a central display screen, a front passenger entertainment screen, a screen on the rear of a head restrain of a driver, a screen on the rear of a head restrain of a front passenger, an entertainment screen in a left area of a third-row, and an entertainment screen in a right area of the third-row. For another example, a cabin of a bus may include a front-row entertainment screen and a rear-row entertainment screen; or may include a display in a driving area and an entertainment screen in a passenger area. In an implementation, the entertainment screen in the passenger area may alternatively be disposed on a top of the cabin.

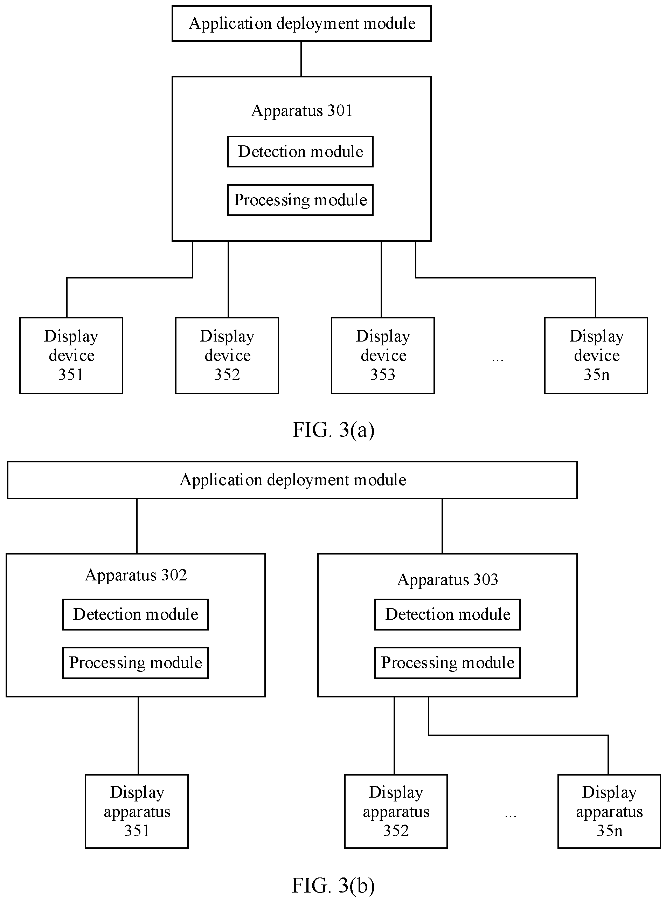

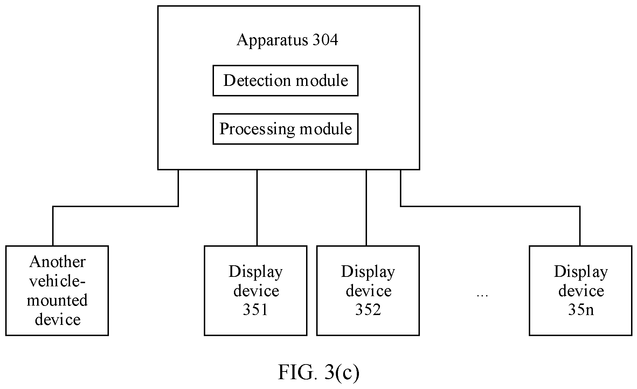

FIG. 3(a) to FIG. 3(c) are a block diagram of a display control system according to an embodiment of this application. As shown in FIG. 3(a), a system includes an application deployment module, an apparatus 301, and a plurality of display devices 351 to 35n controlled by the apparatus 301. The application deployment module may deploy all applications (and/or widgets). In an example, the application deployment module may store a correspondence between each screen in a cabin and an icon of an application (and/or a widget) displayed on the screen, for example, a screen 201 may display icons of all applications (and/or widgets), and screens 202 to 204 may display icons of some applications (and/or widgets). Table 1 shows the correspondence between each screen in the cabin and the icon of the application displayed on the screen. In another example, the application deployment module may further store a correspondence between a human body feature or identity information of a user and an application (and/or a widget). For example, specific applications (and/or widgets) correspond to a male user, a female user, a juvenile user, an elderly user, and the like, specific applications (and/or widgets) corresponding to identity information of a user A, and the like. Table 2 shows the correspondence between the human body feature and the application and Table 3 shows the correspondence between the identity information and the application. For example, the application deployment module may include one or more processors in the computing platform 150 shown in FIG. 1. The apparatus 301 includes a detection module and a processing module. The detection module may include one or more camera apparatuses and one or more sensors in the sensing system 120 shown in FIG. 1. The processing module may include one or more processors in the computing platform 150 shown in FIG. 1. The display devices 351 to 35n may include one or more display apparatuses 130 in FIG. 1. For example, the display devices 351 to 35n may be one or more of the screens 201 to 204 shown in FIG. 2. In a specific implementation process, the processing module determines, based on pressure information of a seat, face information of a user, audio information, and the like, whether there is a user in a cabin and a location of the user, and further controls a display device at the location of the user to display an icon of an application and/or a widget, where icons of specific applications that are specifically displayed on the display device may be determined based on the correspondence stored by the application deployment module. Optionally, the processing module may determine an age, a gender, and the like of a user based on face information and/or audio information of the user, and further determine, based on the correspondence that is between the application and the age, the gender, and the like of the user and that is stored by the application deployment module, a type of an icon of an application (and/or a type of a widget) displayed on the display device. In some possible implementations, the display control system may alternatively include an apparatus 302 and an apparatus 303, as shown in FIG. 3(b). The apparatus 302 may control a display device 351, and the apparatus 303 may control display devices 352 to 35n. It should be understood that, that the apparatus 302 controls the display device 351 to display icons of specific applications (and/or widgets) may be determined with reference to information detected by a detection module and a correspondence stored by an application deployment module. In some possible implementations, the display control system may alternatively include an apparatus 304. As shown in FIG. 3(c), in addition to controlling display devices 351 to 35n, the apparatus 304 may further control another vehicle-mounted device, and the another vehicle-mounted device includes but is not limited to in-vehicle fragrance, an in-vehicle air conditioner, and an in-vehicle audio and video system. For example, when controlling the display devices 351 to 35n, the apparatus 304 may determine, based on a correspondence stored by an application deployment module, types of icons of applications and/or types of widgets displayed on the display devices 351 to 35n. In some possible implementations, the another vehicle-mounted device mentioned in the foregoing embodiment may alternatively be controlled by using an apparatus different from the apparatus 301 to the apparatus 304 for controlling the display device. This is not specifically limited in embodiments of this application. It should be understood that the foregoing modules and apparatuses are merely examples. In actual application, the foregoing modules and apparatuses may be added or deleted based on an actual requirement.

**Table 1**

| Display | Application |
|---|---|
| Central display screen (screen 201) | Application 1 to application 10 (all applications) |
| Front passenger entertainment screen (screen 202) | Application 4 to application 10 |
| Screen on the rear of a head restrain of a driver (screen 203) | Application 6 to application 10 |
| Screen on the rear of a head restrain of a front passenger (screen 204) | Application 6 to application 10 |

**Table 2**

| Human body feature of a user | Application |
|---|---|
| Male user | Application 1, application 2, and application 3 |
| Female user | Application 1, application 4, and application 5 |
| Juvenile user | Application 5, application 9, and application 10 |
| Elderly user | Application 6, application 7, and application 8 |

**Table 3**

| Identity information of a user | Application |
|---|---|
| User A | Application 1, application 2, and application 3 |
| User B | Application 1, application 4, and application 5 |
| ... | ... |
| User N | Application 6, application 7, and application 8 |

It should be noted that the foregoing "all applications" may be understood as all applications installed on a vehicle.

For example, the "identity information" in this embodiment of this application includes but is not limited to biometric feature information, an account, and the like stored in the vehicle. The biometric feature information includes but is not limited to fingerprint information, palm print information, face information, iris information, and gait information. The account may include account information for logging in to an in-vehicle infotainment system, and the like.

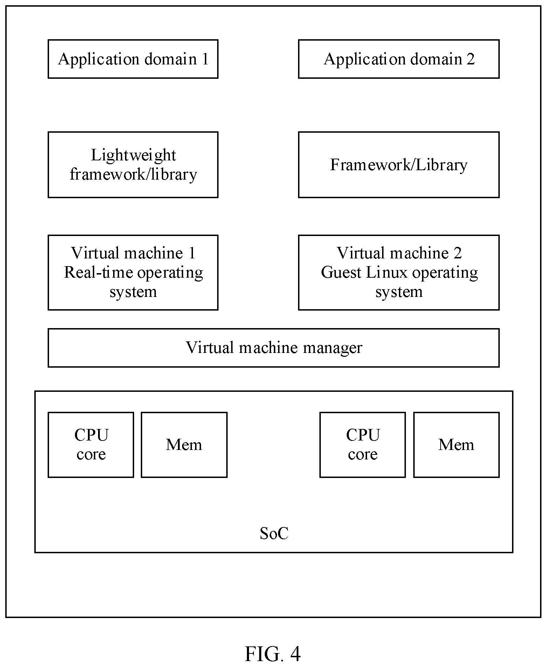

FIG. 4 is a diagram of an architecture of a display control system according to an embodiment of this application. For example, the apparatus 301 shown in FIG. 3(a) (or the apparatus 304 shown in FIG. 3(c)) may be a system-on-a-chip (system-on-a-chip, SOC). The apparatus 301 may simulate, via a plurality of virtual machines, functions of hardware systems required by different types of operating systems, to run different types of operating systems in the apparatus 301, and may manage the plurality of operating systems via a virtual machine manager. For example, a virtual machine 1 may run a real-time operating system (real-time operating system, RTOS), and a virtual machine 2 may run a guest Linux operating system (guest Linux operating system). The apparatus 301 may allocate appropriate resource occupation ratios, such as CPUs, memories, and caches, to different operating systems via the virtual machine manager. Further, based on a lightweight framework/library, an application domain 1 may run on the virtual machine 1. The application domain 1 may include an application in an instrument domain. For example, an instrument display screen may display the application in the instrument domain. Based on a framework/library, an application domain 2 may run on the virtual machine 2. The application domain 2 may include an in-vehicle infotainment (in-vehicle infotainment, IVI) application. In some possible implementations, programs running in the application domain 1 and the application domain 2 may be determined by the application deployment module.

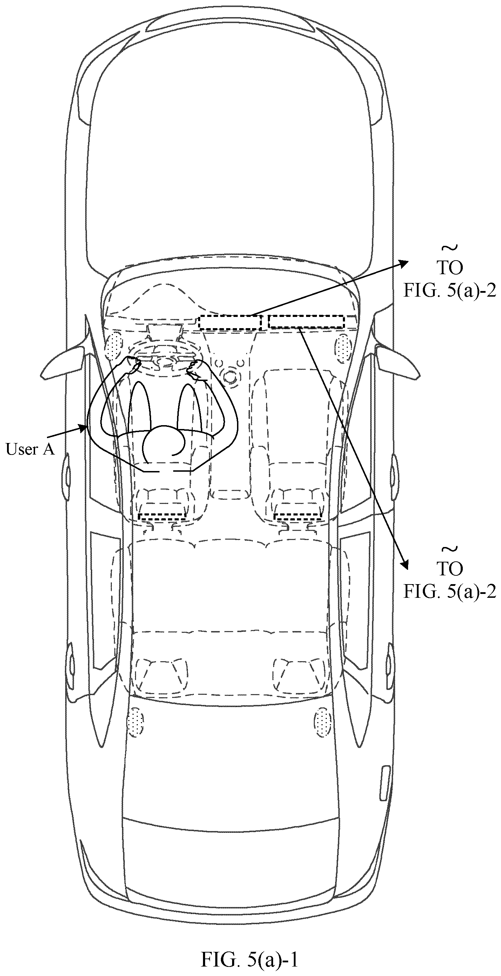

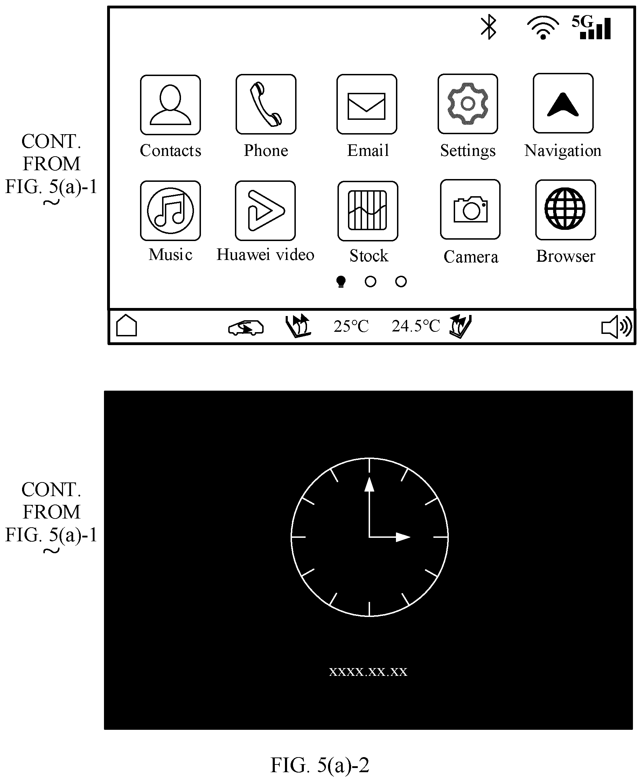

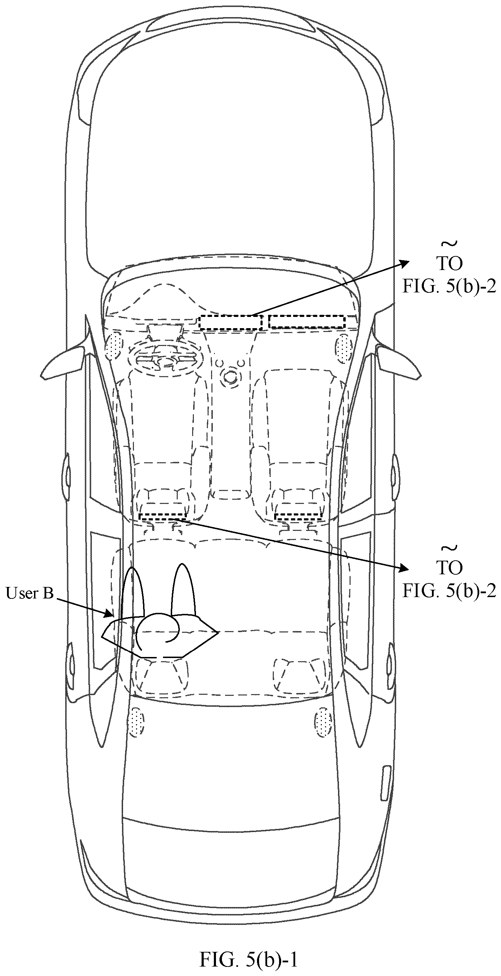

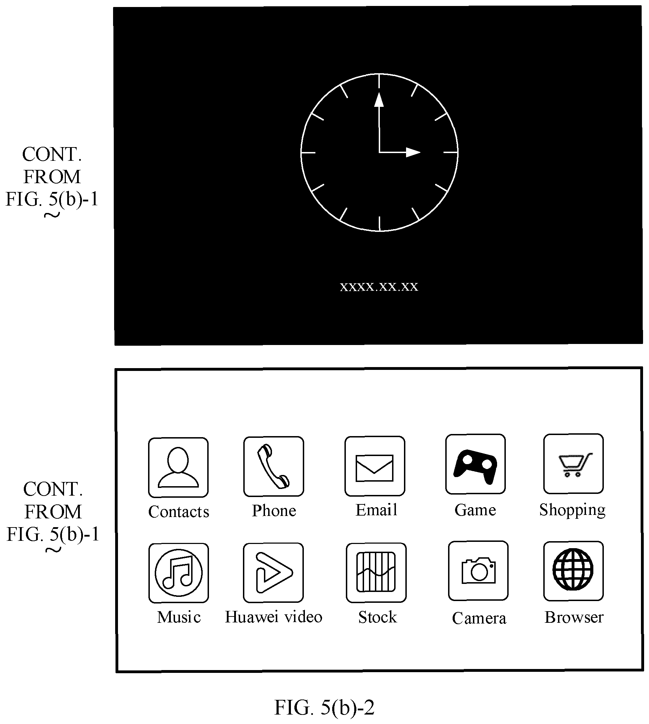

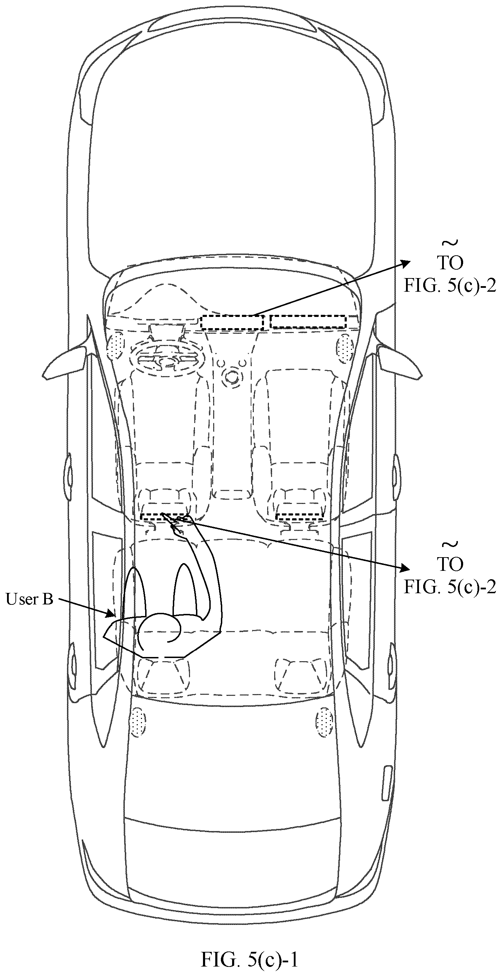

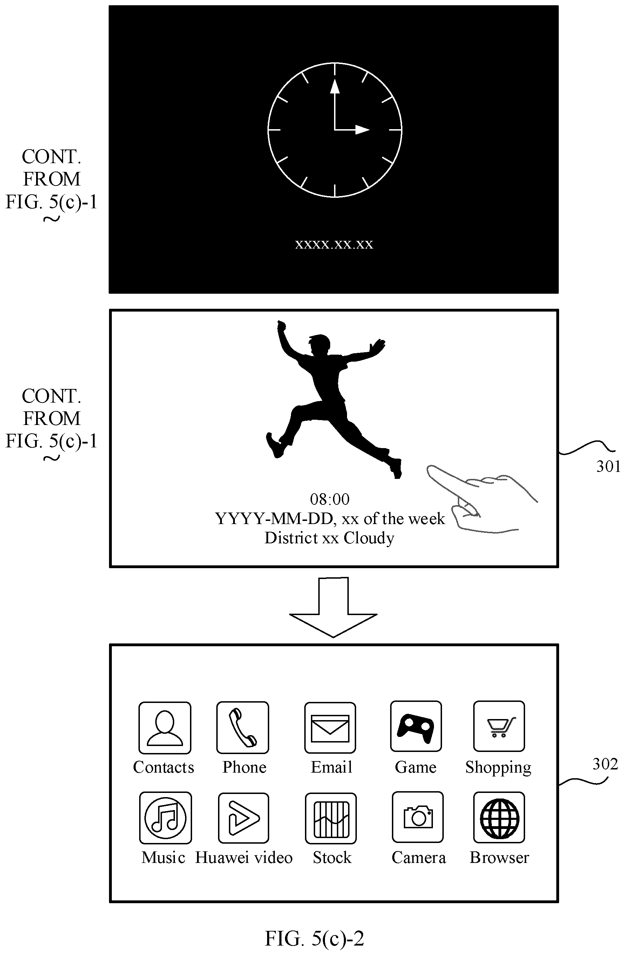

FIG. 5(a)-1 to FIG. 5(c)-2 are a diagram of an application scenario of a display control method according to an embodiment of this application. As shown in FIG. 5(a)-1 and FIG. 5(a)-2, when a vehicle detects a user A in a driver area, the vehicle may control a display 201 to display an icon of an application. Because no user is in location in a front passenger area and a rear-row area in the vehicle, screens of displays 202 to 204 may be controlled to be screen-off, or only information such as time and a date is displayed, as shown in FIG. 5(a)-1 and FIG. 5(a)-2. When no user is in location in a driver area, a display 201 may be screen-off or display only information such as time and a date. Specifically, as shown in FIG. 5(b)-1 and FIG. 5(b)-2, when it is detected that a user B in a left seat in a rear row, a display 203 may be controlled to display an icon of an application.

In some possible implementations, when the vehicle detects the user A in the driver area, the vehicle may control the display 201 to display icons of all applications. The "all applications" may be all applications installed on the vehicle.

In some possible implementations, when a user is detected at any location in the vehicle, the vehicle may control the display 201 to display icons of all applications.

In some possible implementations, when detecting a user in a seat, the vehicle may control a screen at the location to display a sleep display interface, for example, always on display (always on display, AOD), or display another sleep display interface like a static or dynamic wallpaper. An icon of an application is displayed after an operation of tapping the screen by the user is detected. For example, as shown in FIG. 5(c)-1 and FIG. 5(c)-2, when a user B is detected in a left seat in a rear row, a display 203 is controlled to display sleep display information (for example, a static or dynamic wallpaper, current time, a date, a region, and weather) shown in 301. After the user B taps the screen, icons of applications shown in 302 are displayed.

In some possible implementations, content displayed on a screen may be controlled by detecting whether a line of sight of a user stays on the screen. For example, when it is detected that a line of sight of a user is on a screen, the screen is controlled to display sleep display information; or when the line of sight of the user leaves the screen for preset duration, the screen is controlled to be screen-off. For example, the preset duration may be 5 seconds, 10 seconds, or other duration. This is not specifically limited in embodiments of this application.

According to the display control method provided in this embodiment of this application, when no user is in location in a seat corresponding to an in-vehicle screen, an application is not pushed. This helps reduce energy consumption. In some scenarios, more computing resources are allocated to an in-vehicle screen corresponding to a seat with a user, so that the user obtains better driving experience. In addition, an application is pushed after a user enters a cabin of the vehicle. This further helps improve man-machine interaction experience of the user in a process of using the vehicle.

In some possible implementations, when the vehicle detects a user A in a driver area, the vehicle may control a display 201 to display one or more widgets, as shown in FIG. 6(a)-1 and FIG. 6(a)-2. A screen in a seat where there is no user may be controlled to be screen-off, or display sleep display information. Alternatively, when the vehicle detects a user B in a left seat in a rear row, the vehicle may control a display 203 to display one or more widgets, as shown in FIG. 6(b)-1 and FIG. 6(b)-2. A screen in a seat where there is no user may be controlled to be screen-off, or display sleep display information. Alternatively, when detecting a user in a seat, the vehicle may control a screen at the location to display a static or dynamic wallpaper. One or more widgets are displayed after an operation of tapping the screen by the user is detected. As shown in FIG. 6(c)-1 and FIG. 6(c)-2, when detecting a user B in a left seat in a rear row, the vehicle controls a display 203 to display sleep display information shown in 401, including a static or dynamic wallpaper, current time, a date, a region, weather, and the like. After the user B taps the screen, widgets as shown in 402 are displayed.

For example, the widgets may be associated with some applications installed on the vehicle. For example, the widget may be associated with an in-vehicle music application. The widget may display a singer name and lyrics information corresponding to a piece of music, a playback progress bar, a favorites control, a control for switching to playing a previous piece of music, a pause/play control, a control for switching to playing a next piece of music, and the like. When the vehicle detects an operation of tapping the widget by the user, the vehicle may display a display interface of the in-vehicle music application on the in-vehicle screen.

The widget may display text information and control information, or may display only an icon of an application. For example, the widget may display only an icon of an in-vehicle music application.

The widget may be associated with some local functions of the vehicle. For example, the widget may be associated with information about a state of charge of the vehicle and endurance mileage corresponding to the state of charge. When the vehicle detects an operation of tapping the widget by the user, the vehicle may display, on the in-vehicle screen, a display interface of the state of charge of the vehicle and the endurance mileage corresponding to the state of charge.

The widget may be associated with a display interface of some functions of an application. For example, the widget may be associated with a payment function of a payment application. When the vehicle detects that the user taps the widget, the vehicle may not display a home page of the payment application, but directly display a display interface associated with the payment function of the payment application.

The widget may be associated with a display list of a plurality of applications. When the vehicle detects an operation of tapping the widget by the user, the vehicle may display, on the in-vehicle screen, a display interface of the plurality of applications installed on the vehicle.

The widget may be displayed on the in-vehicle screen based on settings of the user. For example, the user may edit, by using a settings function, a widget that the user wants to display in a GUI. Alternatively, the widget may be set during delivery of the vehicle. This is not specifically limited in embodiments of this application.

In the GUI, only four widgets are used as an example for description. The GUI may further include more or fewer widgets. This is not limited in this embodiment of this application.

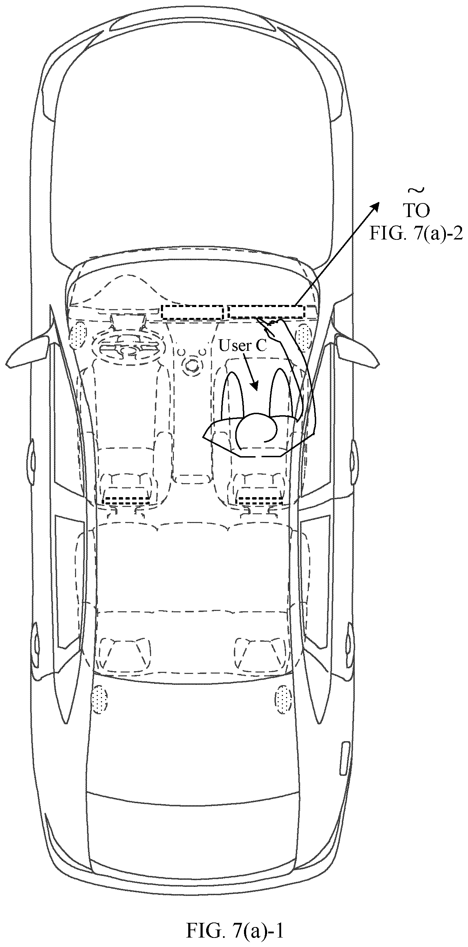

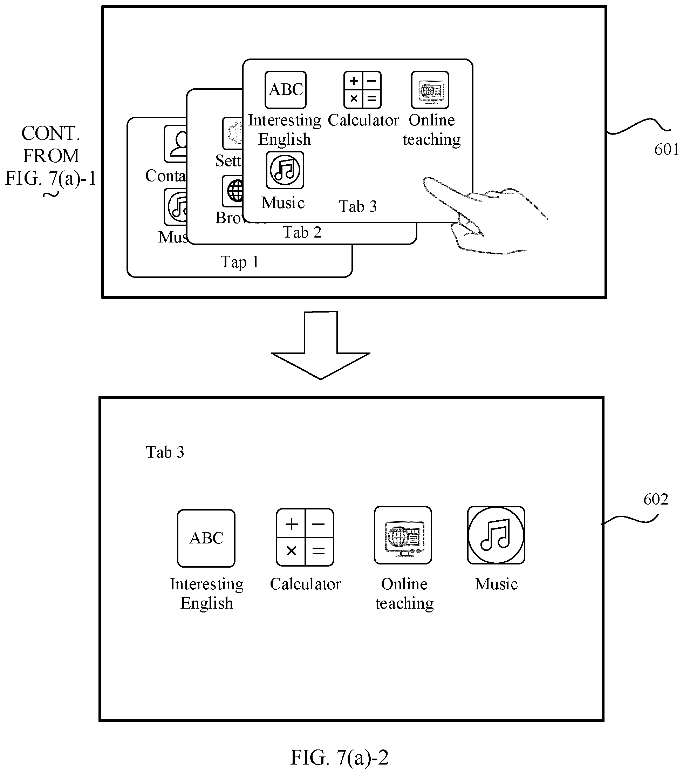

In some possible implementations, when the vehicle detects a user in a seat, the vehicle may control a screen corresponding to the seat to display one or more tabs, where each tab includes icons of one or more applications, and the user may tap any location of a tab to select the tab. When the tapping operation of the user is detected, the in-vehicle screen displays icons of one or more applications included in the tab. For example, as shown in FIG. 7(a)-1 and FIG. 7(a)-2, when the vehicle detects a user in a front passenger area, the vehicle controls a display 202 to display a tab 1, a tab 2, and a tab 3 shown in 601. After the user taps the tab 3, the vehicle controls the display 202 to display icons of applications included in the tab 3 shown in 602.

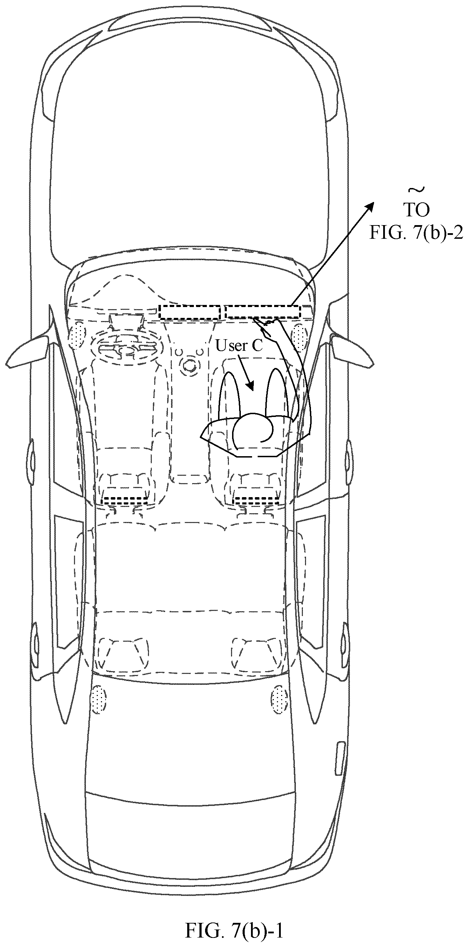

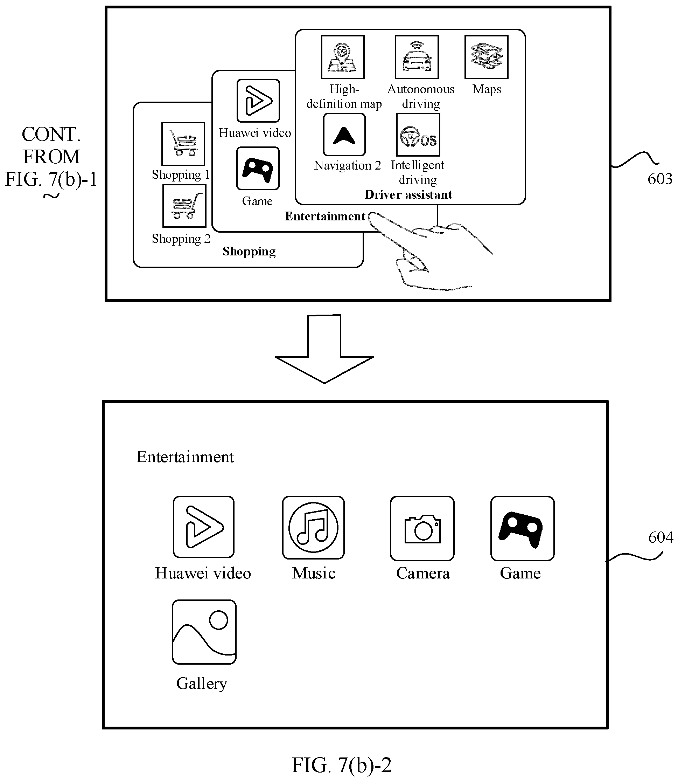

Icons of applications in the tabs may be displayed on the in-vehicle screen based on settings of the user. For example, the user may edit, by using a settings function, a specific name of a tab and an icon of an application included in the tab. Alternatively, a name of a tab and/or an icon of an included application may be set during delivery of the vehicle. This is not specifically limited in embodiments of this application. For example, an icon of a shopping-type application may be set in a "shopping" tab, an icon of a video-type application, an icon of a music-type application, and an icon of a game-type application may be set in an "entertainment" tab, and an icon of a navigation-type application and an icon of a maps-type application may be set in a "driver assistant" tab. Details are shown in FIG. 7(b)-1 and FIG. 7(b)-2. After detecting that a user taps the "entertainment" tab shown in 603, the vehicle controls a display 202 to display icons of applications included in the "entertainment" tab shown in 604.

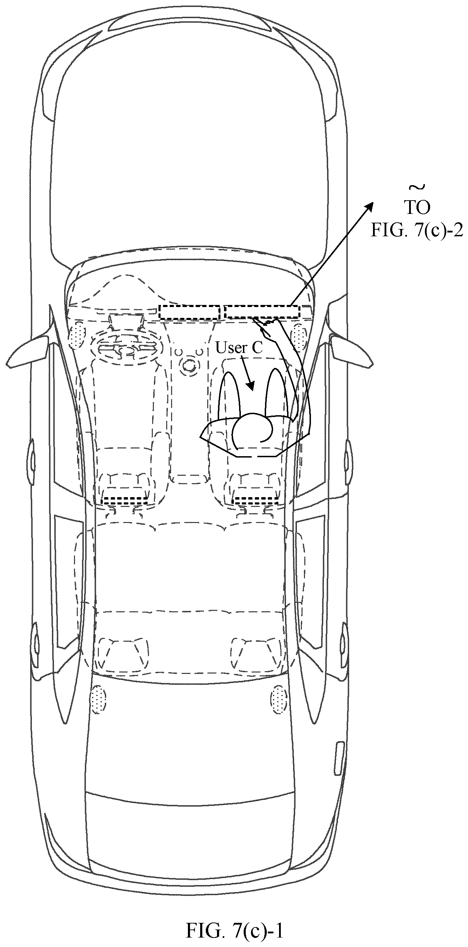

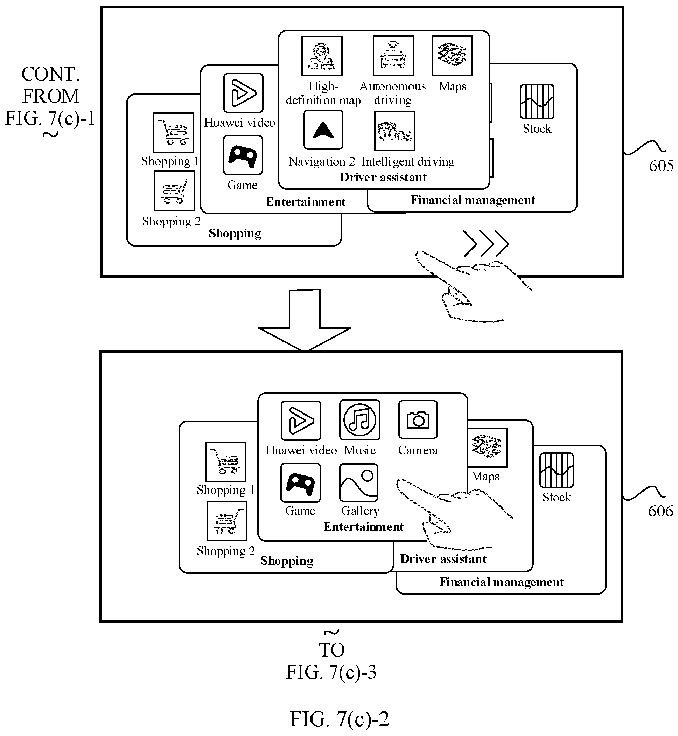

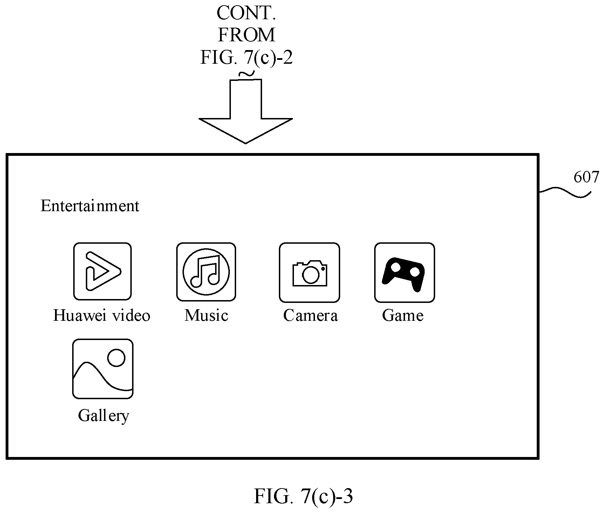

In some possible implementations, as shown in FIG. 7(c)-1 to FIG. 7(c)-3, a plurality of tabs may be displayed in a scrolling form. When a finger of a user slides leftwards or rightwards on an in-vehicle screen, one tab is always displayed on the top of another tab. As shown in 605, a "driver assistant" tab is displayed on the top of the in-vehicle screen. When it is detected that the finger of the user slides rightwards on the in-vehicle screen, the in-vehicle screen switches to displaying an "entertainment" tab on the top of the in-vehicle screen, as shown in 606. After an operation of tapping the "entertainment" tab by the user is detected, the in-vehicle screen displays icons of applications included in the "entertainment" tab shown in 607.

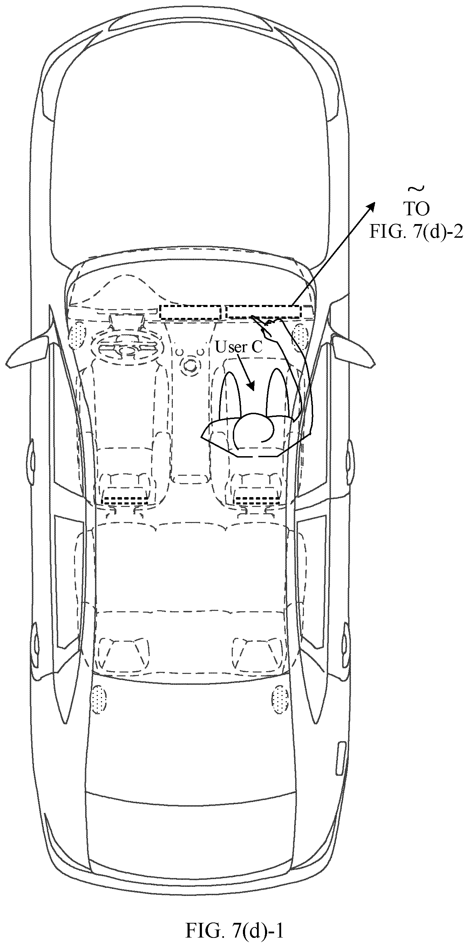

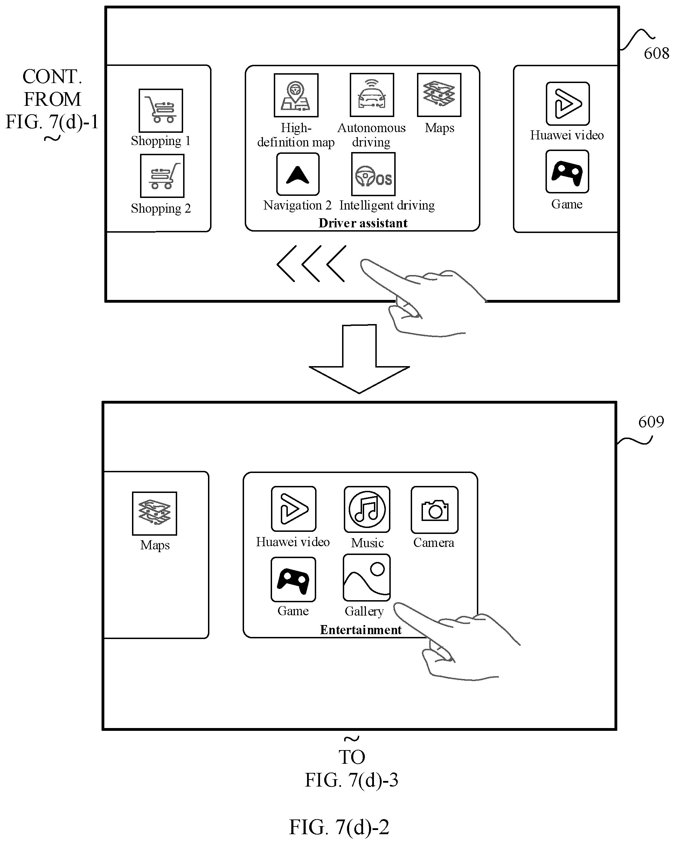

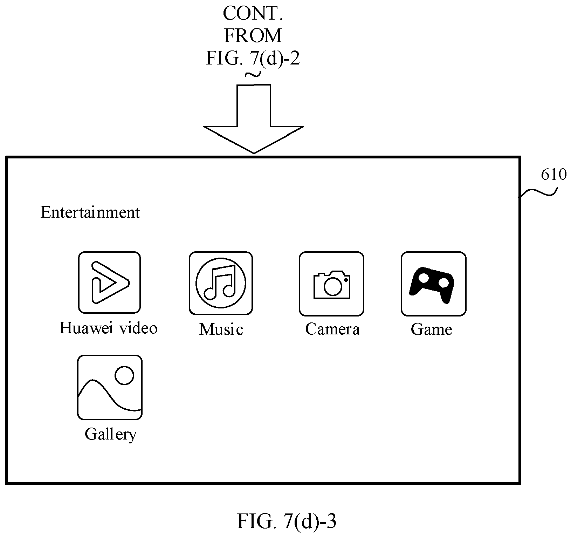

In some possible implementations, a plurality of tabs may alternatively be displayed in a tiled form. Specifically, as shown in FIG. 7(d)-1 to FIG. 7(d)-3, when a finger of a user slides leftwards or rightwards on an in-vehicle screen, a tab displayed in the middle of the in-vehicle screen may be switched. As shown in 608, a "driver assistant" tab is displayed in the middle of the in-vehicle screen. When it is detected that the finger of the user slides leftwards on the screen, the in-vehicle screen switches to displaying an "entertainment" tab in the middle of the in-vehicle screen, as shown in 609. After an operation of tapping the "entertainment" tab by the user is detected, the in-vehicle screen displays icons of applications included in the "entertainment" tab shown in 610.

It should be understood that when the plurality of tabs are displayed in the tiled or scrolling form, the plurality of tabs may also be arranged up and down on the in-vehicle screen. When the finger of the user slides upwards and downwards on the in-vehicle screen, a tab displayed on the top of the in-vehicle screen or in the middle of the in-vehicle screen may be switched. Alternatively, the plurality of tabs may be displayed on the in-vehicle screen in another form. This is not specifically limited in embodiments of this application.

The names of the tabs and the icons of the applications included in each tab may be displayed on the in-vehicle screen based on settings of the user. For example, the user may perform editing based on a settings function, and set tabs such as "financial management", "sport", "work", and "learning". Alternatively, the names of the tabs and the icons of the applications included in each tab may be set during delivery of the vehicle. This is not specifically limited in embodiments of this application.

In the display control method provided in embodiments of this application, icons of more applications are displayed in a tab form, and after the user selects a specific tab by using a tap operation, the icons of the applications in the tab are pushed, so that more selections can be provided for the user when fewer computing resources are occupied. This helps improve user experience.

In the display control method provided in embodiments of this application, a type of the application or a type of the widget displayed by the display device may be determined based on a real-time status of the vehicle (for example, the vehicle is in a traveling state or a parking state), or a type of the application or a type of the widget displayed by the display device may be determined based on a gender, an age, or the like of the user.

For example, as shown in FIG. 8(a)-1 and FIG. 8(a)-2, in a traveling process of a vehicle, a display 201 may be controlled to display icons of driving-related applications (such as an icon of a navigation-type application and an icon of a maps-type application) and icons of other commonly used applications (such as an icon of a music-type application and an icon of a communication-type application), and displays 202 to 204 may be controlled to display icons of entertainment-related applications, for example, an icon of a video-type application, an icon of a music-type application, and an icon of a game-type application. When a vehicle is in a parking state, a display 201 may be controlled to display icons of entertainment-related applications, as shown in FIG. 8(b)-1 and FIG. 8(b)-2. In some possible implementations, when a finger of a user slides leftwards or rightwards on an in-vehicle screen, an icon of an application displayed on the screen may be switched. For example, in a traveling process of a vehicle, a display 201 may be controlled to display an icon of a driving-type application on a first page; or when a vehicle is in a parking state, a display 201 may be controlled to display an icon of an entertainment-type application on a first page. When an operation in which the finger of the user slides leftward is detected, the display 201 is controlled to display an icon of an application on a second page. In some possible implementations, after a vehicle changes from a traveling state to a parking state and is in the parking state for fixed duration, a display 201 may be controlled to display an icon of an entertainment-type application on a first page. For example, the fixed duration may be 30 seconds, 60 seconds, or other duration. This is not specifically limited in embodiments of this application

For example, as shown in FIG. 9(a)-1 and FIG. 9(a)-2, when it is detected that users are in location at locations corresponding to in-vehicle screens, if a user is a male user E, an icon of an application preferred by the male user is pushed, for example, an icon of a game-type application (for example, an icon of a game application) or an icon of a financial management-type application (for example, an icon of a stock application); and if a user is a female user F, an icon of an application preferred by the female user is pushed, for example, an icon of a shopping-type application (for example, an icon of a shopping application) or an icon of a picture-retouching-type application (for example, an icon of a camera application). Specifically, as shown in FIG. 9(b)-1 and FIG. 9(b)-2, after the male user E and the female user F exchange locations, icons of applications are also switched on the in-vehicle screens at the corresponding locations.

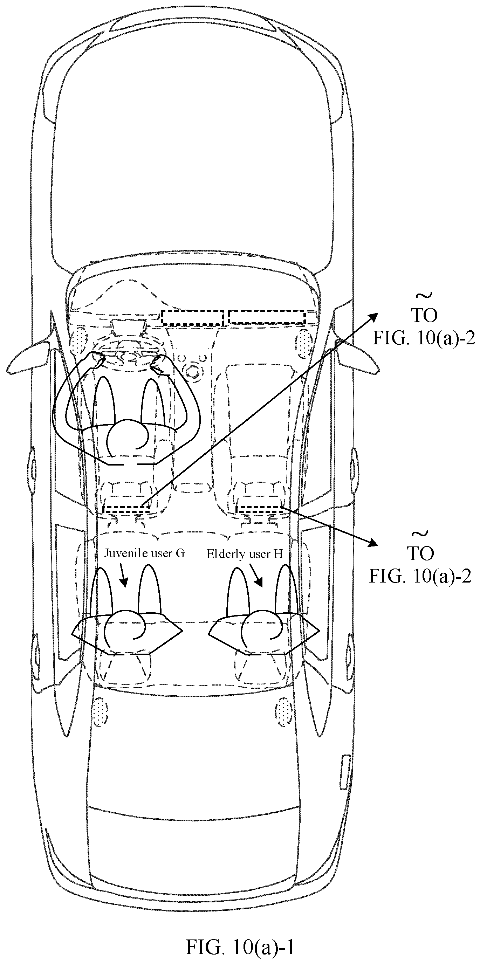

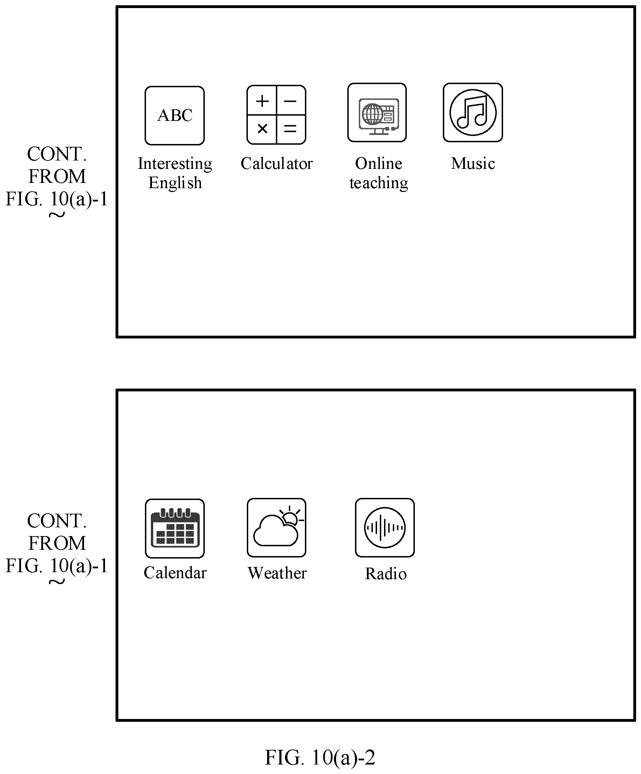

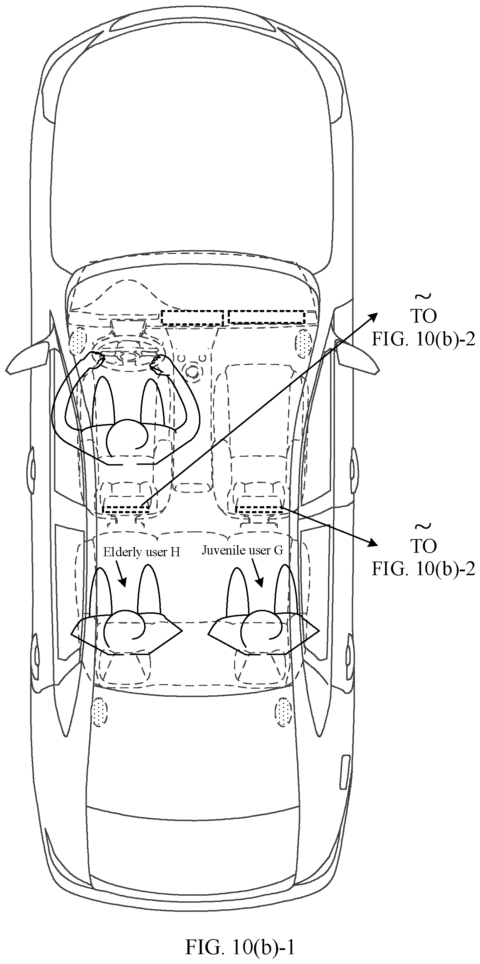

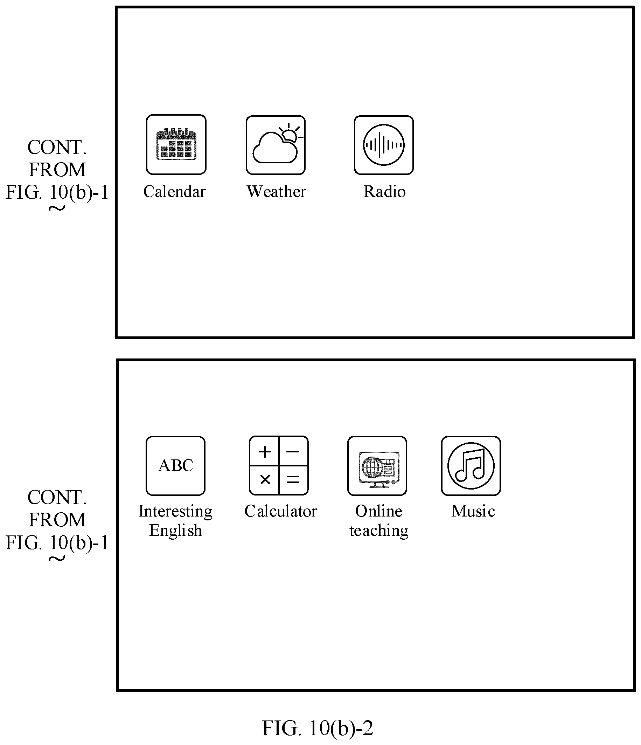

For example, as shown in FIG. 10(a)-1 and FIG. 10(a)-2, when it is detected that users are in location at locations corresponding to in-vehicle screens, if a user is a juvenile user G, an icon of an application preferred by the juvenile user is pushed, for example, an icon of a learning-type application (for example, an icon of interesting English, an icon of calculator, or an icon of online teaching), and an icon of an entertainment-type application (for example, an icon of a music application); and if a user is an elderly user H, an icon of an application preferred by the elderly user is pushed, for example, an icon of calendar, an icon of weather, and an icon of radio. Specifically, as shown in FIG. 10(b)-1 and FIG. 10(b)-2, after the juvenile user G and the elderly user H exchange locations, icons of applications are also switched on the in-vehicle screens at the corresponding locations.

It should be understood that the "application preferred by the male user", the "application preferred by the female user", the "application preferred by the juvenile user", and the "application preferred by the elderly user" may be set by the user, or may be set during delivery of the vehicle, or may be set in another manner. This is not specifically limited in embodiments of this application.

In the display control method provided in embodiments of this application, the type of the icon of the application or the widget displayed by the display device can be determined based on the real-time status of the vehicle, and the gender, the age, and the like of the user. This helps improve man-machine interaction experience of the user.

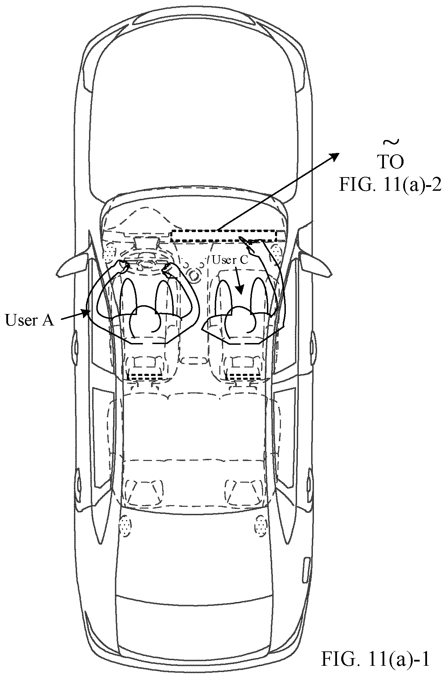

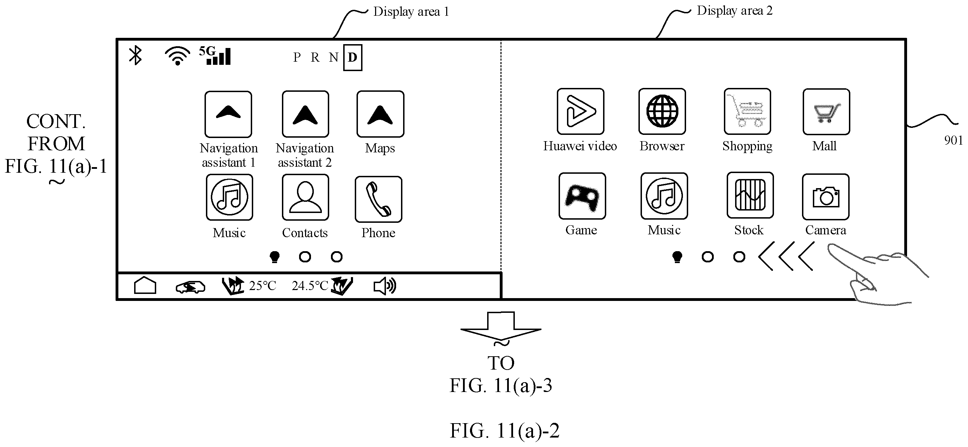

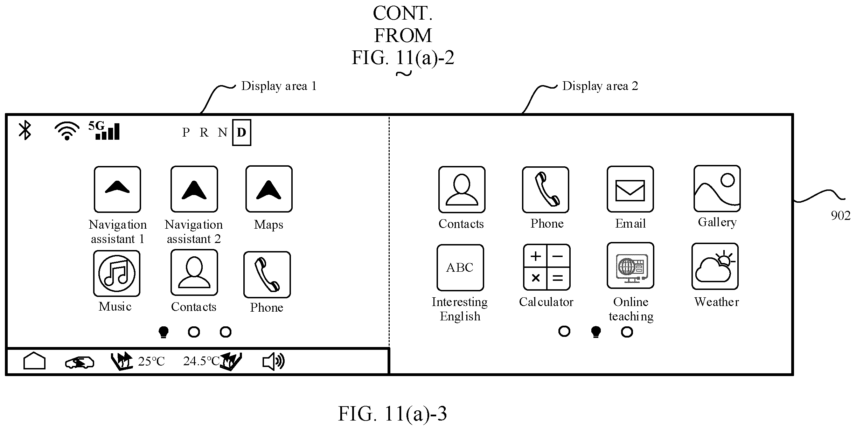

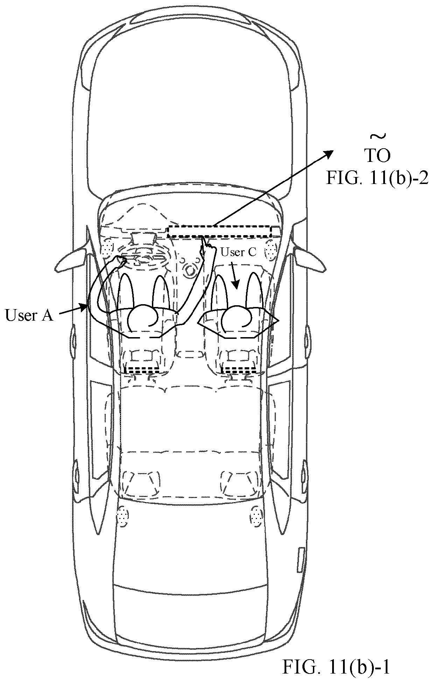

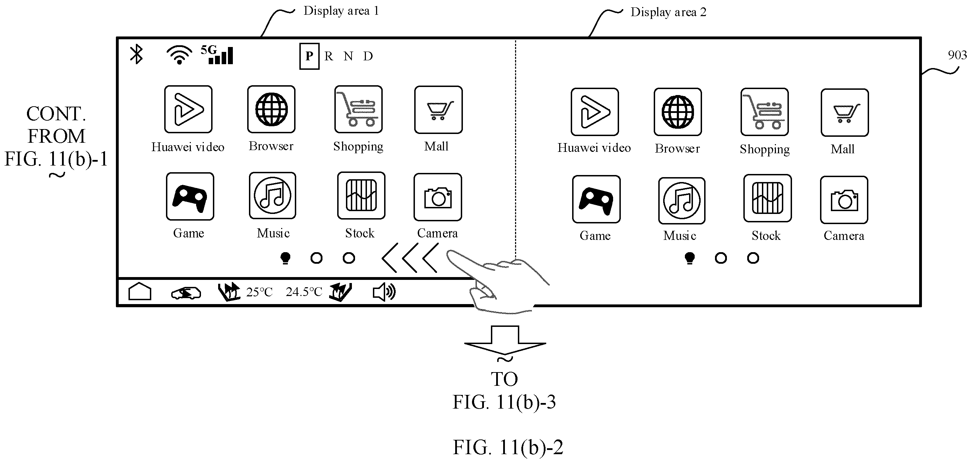

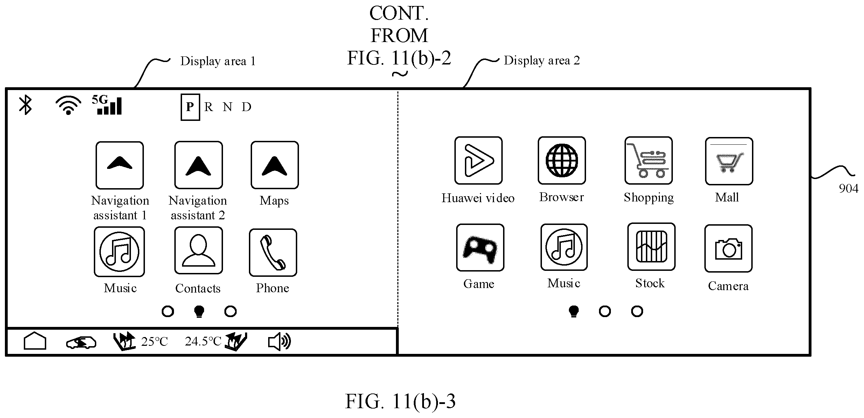

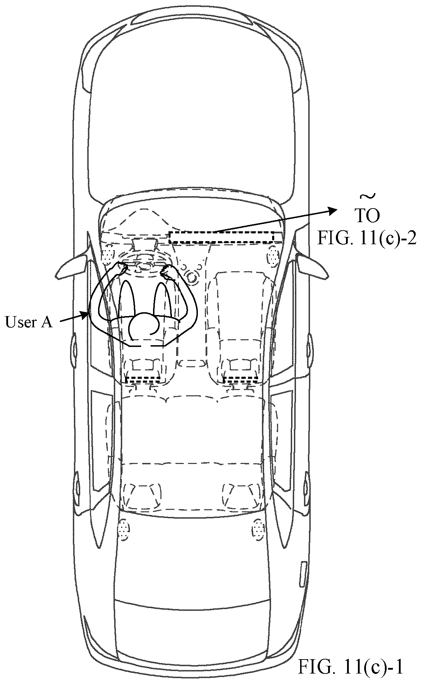

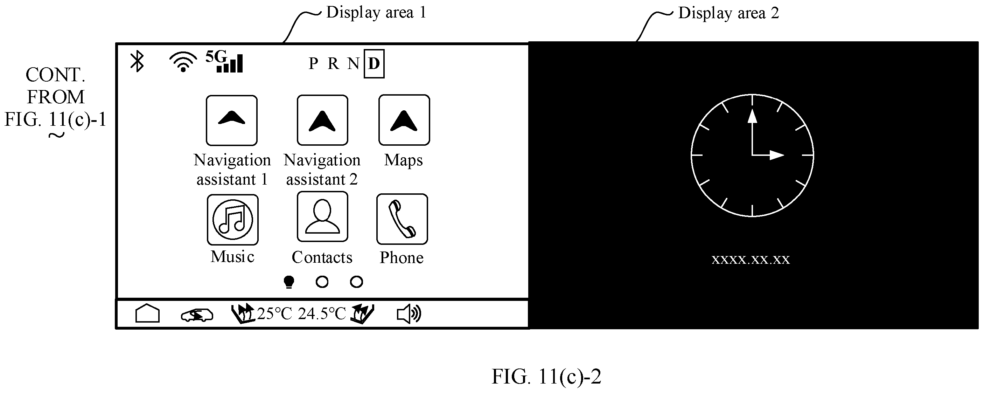

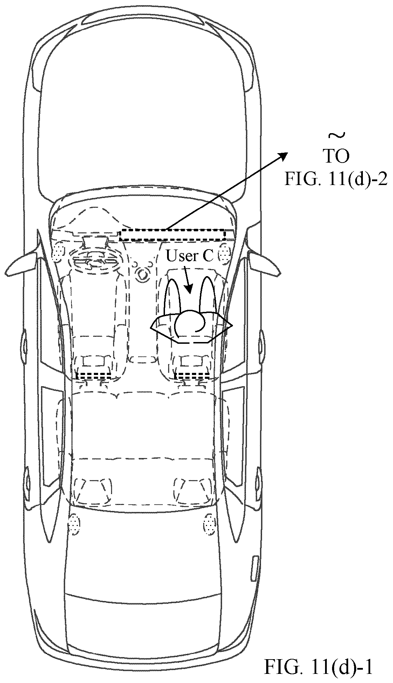

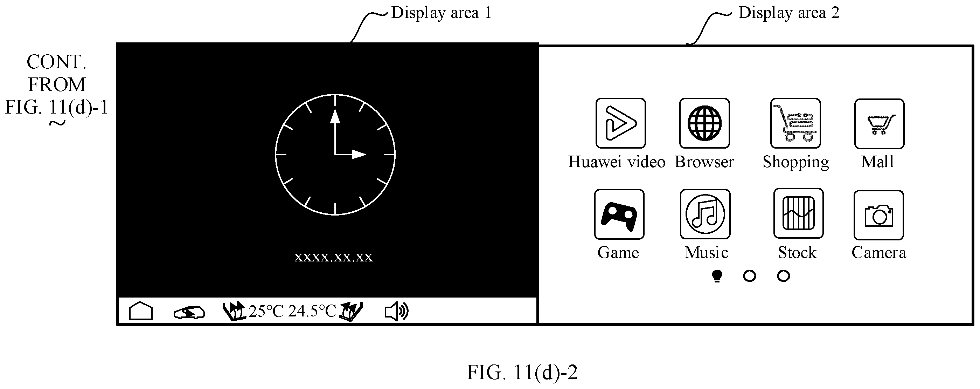

In some possible implementations, a central display screen and a front passenger entertainment screen in a cabin of a vehicle may be a same screen, as shown in FIG. 11(a)-1 to FIG. 11(d)-2. The screen may be divided into two display areas: a display area 1 and a display area 2. The display area 1 may be a display area close to a driver user, and the display area 2 is a display area close to a front passenger area. The display area 1 and the display area 2 may display same icons of applications or widgets, or the display area 1 and the display area 2 may display different icons of applications or widgets. When a finger of a user slides in the display area 1, switching of display content in the display area 1 may be controlled. When a finger of a user slides in the display area 2, switching of display content in the display area 2 may be controlled. Switching of display content in the two areas may not affect each other.

For example, both a display area 1 and a display area 2 on an in-vehicle screen display icons of applications on a first page. As shown in 901 in FIG. 11(a)-1 to FIG. 11(a)-3, the first page displayed in the display area 1 may display icons of applications commonly used in a traveling process, including an icon of a navigation assistant 1, an icon of a navigation assistant 2, an icon of a maps application, an icon of a music application, an icon of a contacts application, and an icon of a phone application; and the first page displayed in the display area 2 may display icons of commonly used entertainment applications, including an icon of Huawei video, an icon of a browser application, an icon of a shopping application, an icon of a mall application, an icon of a game application, an icon of a music application, an icon of a stock application, and an icon of a camera application. After a finger of a front passenger user C slides leftwards in the display area 2, the display area 2 displays icons of applications on a second page, and the display area 1 keeps displaying the icons of the applications on the first page unchanged, as shown in 902. Alternatively, after a finger of a driver user A slides leftwards in the display area 1, the display area 1 displays icons of applications on a second page, and the display area 2 keeps displaying the icons of the applications on the first page unchanged, as shown in 904 in FIG. 11(b)-1 to FIG. 11(b)-3. In some possible implementations, when there is no user in a front passenger seat, the front passenger entertainment screen may be controlled to be screen-off or to display a sleep display interface, as shown in FIG. 11(c)-1 and FIG. 11(c)-2. When there is no user in a driver seat, a driver screen may be controlled to be screen-off or to display a sleep display interface, as shown in FIG. 11(d)-1 and FIG. 11(d)-2. It should be understood that, in embodiments of this application, types of the icons of the applications or types of the widgets displayed in the display area 1 and/or the display area 2 may be determined based on the real-time status of the vehicle (for example, the vehicle is in the traveling state or the parking state); or types of the icons of the applications or types of the widgets displayed in the display area 1 and/or the display area 2 may be determined based on a gender, an age, and the like of the user. For example, in a traveling process of the vehicle, an icon of a driving-type application may be displayed in a display area 1; or when the vehicle is in a parking state, an icon of an entertainment-type application may be displayed in a display area 1. In some possible implementations, in a traveling process of the vehicle, a display area 1 may display icons of driving-type applications on a first page, as shown in 901; or when the vehicle is in a parking state, the display area 1 may display icons of entertainment-type applications on a first page, as shown in 903.

It should be noted that a quantity of icons of applications and/or a quantity of widgets displayed in the GUI shown in FIG. 5(a)-1 to FIG. 11(d)-2 may be determined based on a resource occupation status of a system.

The following describes, by using an example, a method for determining, by a vehicle, whether there is a user in a cabin and a location of the user in the cabin.

In embodiments of this application, the vehicle may detect, by using a sensor, whether the user is in location in a seat, including but not limited to: detecting, by using a sound wave sensor, whether the user is in location in the seat; detecting, by using a camera apparatus or an in-vehicle visual sensor, whether the user is in location in the seat; and detecting, by using a pressure sensor disposed in the seat, whether the user is in location in the seat.

For example, the detecting, by using a sound wave sensor, whether the user is in location in the seat may be specifically: determining, by the vehicle based on audio information obtained by the sound wave sensor, whether there is the user in the cabin, and the actual location of the user. The audio information may be audio information obtained after various types of invalid audio information are excluded from collected audio information in the vehicle, and the invalid audio information may be audio information with excessively low volume. A location of a sound source may be a location of a sound source corresponding to the audio information. The location of the sound source may be a relative location of an in-vehicle screen that is located based on the sound source, or may be specific location coordinates. This is not specifically limited in embodiments of this application.

For example, the location of the sound source may be determined based on a time difference of arrival (time difference of arrival, TDOA) principle and audio information collected by a plurality of sound wave sensors. For example, sound wave sensors A and B each detect that audio is sent from a sound source S, and if time when a sound source signal of the sound source S arrives at the sound wave sensor Ais t1, and time when the sound source signal of the sound source S arrives at the sound wave sensor B is t2, a time difference dt=|t1-t2|. If a distance between the sound source S and the sound wave sensor A is set to AS, a distance between the sound source S and the sound wave sensor B is set to BS, and a sound speed is c, dt=t1-t2=AS/c-BS/c may be obtained. Then, based on a distance a between the two sound wave sensors, one of the sensors is selected as a reference point, and a location of the sound source may be determined.

In some possible implementations, the audio information may be a speech including a specific wake-up word, for example, "turning on an in-vehicle infotainment" or "turning on a smart screen". The sound wave sensor may be an ultrasonic wave transceiver apparatus integrated or installed on the in-vehicle screen or an ultrasonic wave transceiver apparatus (including but not limited to a microphone sensor or a microphone sensor array) installed in the cabin of the vehicle.

For example, the detecting, by using a camera apparatus or an in-vehicle visual sensor, whether the user is in location in the seat may be specifically: obtaining face information of the user by using the camera apparatus or the in-vehicle visual sensor, so as to determine, based on the face information of the user, whether there is the user in the cabin and the actual location of the user. The camera apparatus or the in-vehicle visual sensor includes but is not limited to a camera sensor integrated or installed on the in-vehicle screen or a camera sensor installed in the cabin of the vehicle, for example, a red green blue (red green blue, RGB) camera, a red green blue-infrared radiation (red green blue-infrared radiation, RGB-IR) camera, or a time of flight (time of flight, TOF) camera.

In some possible implementations, after the face information of the user is obtained, a gender, an age, and the like of the user may be determined by using an algorithm like a facial attribute recognition algorithm or a facial gender classification algorithm. For example, after the face information of the user is obtained, it may be determined, by using a gaze estimation (gaze estimation) algorithm, a gaze tracking algorithm, or the like, whether a gaze focus of the user is on the in-vehicle screen, so as to control content displayed on the in-vehicle screen.

In some possible implementations, a lidar integrated or installed on the in-vehicle screen or a lidar installed in the cabin of the vehicle, a radio transceiver apparatus (including but not limited to a millimeter wave radar or a centimeter wave radar) on the in-vehicle screen or at an edge of the in-vehicle screen, an infrared sensing apparatus (including but not limited to an infrared rangefinder and a laser rangefinder) integrated on the in-vehicle screen or at an edge of the in-vehicle screen, an eye tracker, or the like may be used to detect whether the user is in location in the seat.

For example, the detecting, by using a pressure sensor disposed in the seat, whether the user is in location in the seat may be specifically: when pressure in the seat is greater than or equal to a preset threshold, determining that the user is in location in the seat. For example, the preset threshold may be 100 newtons (Newtons, N), 200 N, or another value. This is not specifically limited in embodiments of this application.

It should be understood that, to detect whether there is the user in the cabin and the actual location of the user, any one of the foregoing methods may be used, or a combination of the foregoing methods may be used, or another method may be used. This is not specifically limited in embodiments of this application.

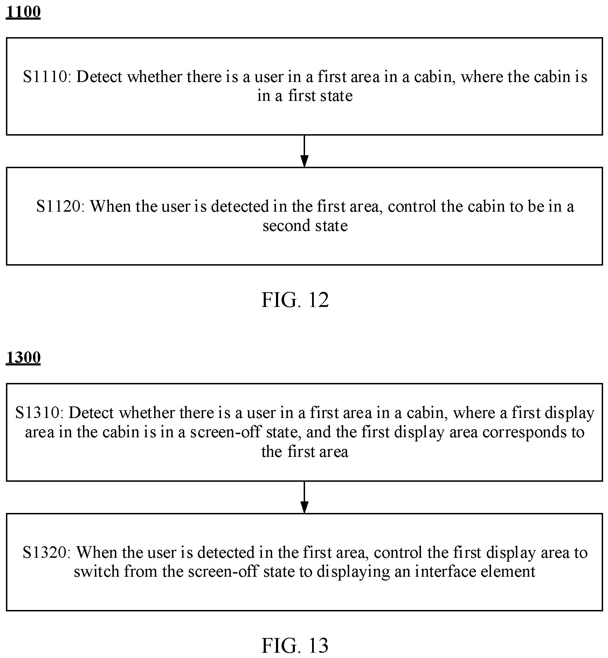

FIG. 12 is a schematic flowchart of a display control method 1100 according to an embodiment of this application. The method 1100 is applied to the vehicle 100 shown in FIG. 1, and the method may be performed by the systems shown in FIG. 3(a) to FIG. 3(c). Steps or operations of the display control method shown in FIG. 12 are merely examples. In embodiments of this application, other operations or variations of the operations in FIG. 12 may be performed. The method 1100 includes the following steps.

S1110: Detect whether there is a user in a first area in a cabin, where the cabin is in a first state.

For example, for a specific method for detecting whether there is the user in the first area in the cabin, refer to the description in the foregoing embodiment. Details are not described herein again.

For example, the cabin may include at least one of the displays 201 to 204 in the foregoing embodiment; or the cabin may further include the in-vehicle fragrance, the in-vehicle air conditioner, the in-vehicle audio and video system, and the like in the foregoing embodiment; or the cabin may further include another device. This is not specifically limited in embodiments of this application.

For example, that the cabin is in a first state may include at least one of the following: The in-vehicle displays (for example, the displays 201 to 204) are in a screen-off state; the in-vehicle fragrance is in an off state, that is, the in-vehicle fragrance does not release fragrance; the in-vehicle air conditioner is in a power-off state; and the in-vehicle audio and video system is in a power-off state.

S1120: When the user is detected in the first area, control the cabin to be in a second state.

For example, when that the cabin is in a first state includes that the in-vehicle displays (for example, the displays 201 to 204) are in a screen-off state, the controlling the cabin to be in a second state may include: controlling a display in the first area to display icons of one or more applications and/or widgets. For a specific method for controlling the display in the first area to display the icons of the one or more applications and/or widgets, refer to the description in the foregoing embodiment. Details are not described herein again. It should be noted that the display in the first area may include a display disposed in the first area. For example, when the first area is a driver area in the cabin, the display in the first area may be a screen for a driver, for example, a dashboard or a central display screen.

For example, when that the cabin is in a first state includes that the in-vehicle fragrance is in an off state, that is, the in-vehicle fragrance does not release fragrance, the controlling the cabin to be in a second state may include: controlling the in-vehicle fragrance to be on, that is, the in-vehicle fragrance starts to release the fragrance. A type of the released fragrance may be a set default type, or may be a type used last time, or may be another type. This is not specifically limited in embodiments of this application.

For example, when that the cabin is in a first state includes that the in-vehicle air conditioner is in a power-off state, the controlling the cabin to be in a second state may include: controlling the in-vehicle air conditioner to be turned on. In some possible implementations, an in-vehicle air conditioner in the first area may be controlled to be turned on. It should be understood that the in-vehicle air conditioner in the first area may include an in-vehicle air conditioner disposed in the first area. For example, when the first area is a driver area in the cabin, the in-vehicle air conditioner in the first area may be an air conditioner for a driver seat.

For example, when that the cabin is in a first state includes that the in-vehicle audio and video system is in a power-off state, the controlling the cabin to be in a second state may include: controlling the in-vehicle audio and video system to be enabled. For example, when the in-vehicle audio and video system is enabled, audio such as music or a radio channel may be played.

In some possible implementations, when it is detected that there is the user in the first area, controlling the cabin to switch from the first state to the second state may include one of the foregoing examples, or may be a combination of the foregoing two or more examples. In an example, when the cabin is in (the first state) in which a display for a driver seat is screen-off and an in-vehicle fragrance is in an off state, and it is detected that there is a user in a driver area, the in-vehicle fragrance is controlled to be on and the display for the driver seat is controlled to display icons of one or more applications and/or widgets (the second state). In another example, when the cabin is in (the first state) in which a display for a driver seat is screen-off and an in-vehicle fragrance is in an off state, and an in-vehicle air conditioner is in a turned-off state, and it is detected that there is a user in a driver area, the in-vehicle fragrance is controlled to be on, the in-vehicle air conditioner is controlled to be turned on, and the display for the driver seat is controlled to display icons of one or more applications and/or widgets (the second state).

The display control method provided in this embodiment of this application can be used to control a status change of the cabin when it is detected that there is the user in the cabin. This helps improve greeting experience of the user in using the cabin.

FIG. 13 is a schematic flowchart of a display control method 1300 according to an embodiment of this application. The method 1300 is applied to the vehicle 100 shown in FIG. 1, and the method may be performed by the systems shown in FIG. 3(a) to FIG. 3(c). Steps or operations of the display control method shown in FIG. 13 are merely examples. In embodiments of this application, other operations or variations of the operations in FIG. 13 may be performed. The method 1300 includes the following steps.

S1310: Detect whether there is a user in a first area in a cabin, where a first display area in the cabin is in a screen-off state, and the first display area corresponds to the first area.

For example, for a specific method for detecting whether there is the user in the first area in the cabin, refer to the description in the foregoing embodiment. Details are not described herein again.

For example, the first area may be the driver area in the foregoing embodiment, and the first display area may be the screen for the driver in the foregoing embodiment, for example, the screen 201 shown in FIG. 2. The first area may be the front passenger area in the foregoing embodiment, and the first display area may be the screen for the front passenger seat in the foregoing embodiment, for example, the screen 202 shown in FIG. 2. The first area may be the left area in the second row in the vehicle in the foregoing embodiment, and the first display area may be the screen on the rear of the head restrain of the driver in the foregoing embodiment, for example, the screen 203 shown in FIG. 2. The first area may be the right area in the second row in the vehicle in the foregoing embodiment, and the first display area may be the screen on the rear of the head restrain of the front passenger in the foregoing embodiment, for example, the screen 204 shown in FIG. 2.

S 1320: When the user is detected in the first area, control the first display area to switch from the screen-off state to displaying an interface element.

For example, the interface element may be at least one of a widget, an icon of an application, a wallpaper, or an animation in the foregoing embodiment, or may be other content displayed on an in-vehicle screen.

For example, for a method procedure of controlling the first display area to switch from the screen-off state to displaying the interface element, refer to the description in the foregoing embodiment.

For example, as shown in FIG. 5(a)-1 to FIG. 5(b)-2, when a user is detected in a driver area, a central display screen in the driver area is controlled to switch from a screen-off interface or a sleep display interface to displaying an interface element; and when a user is detected in a left seat in a rear row, a screen, on the rear of a head restrain of a driver, corresponding to the left seat in the rear row is controlled to switch from a screen-off interface or a sleep display interface to displaying an interface element.

In some possible implementations, when a user is detected in a driver area, a central display screen in the driver area is controlled to switch from a screen-off interface or a sleep display interface to displaying icons of all applications installed on a vehicle.

Optionally, a type of the displayed interface element may be determined with reference to a human body feature or identity information of the user.

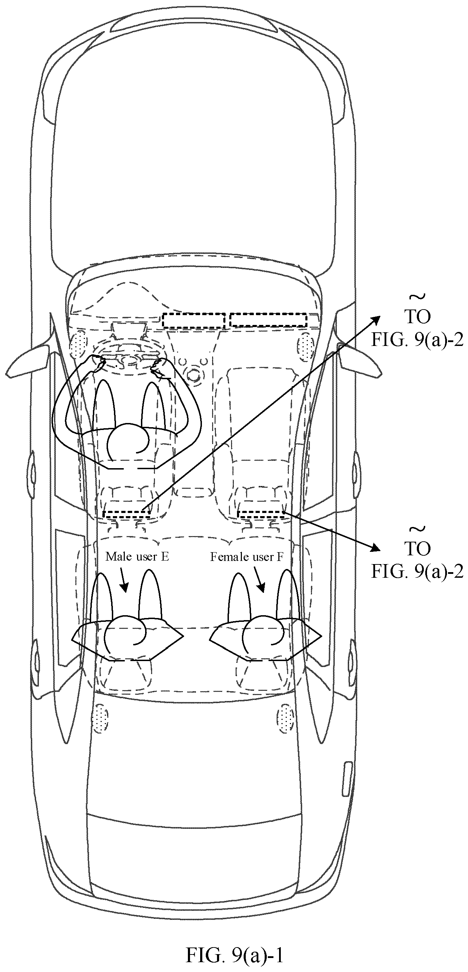

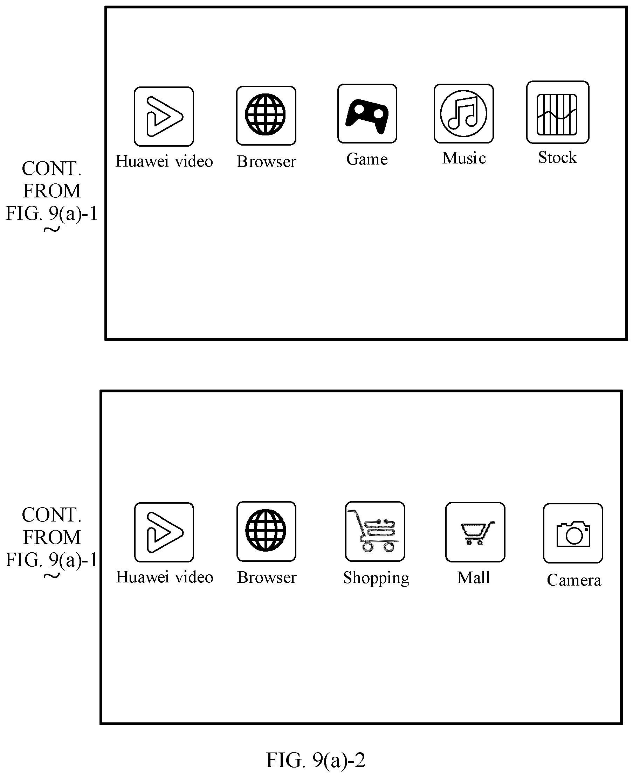

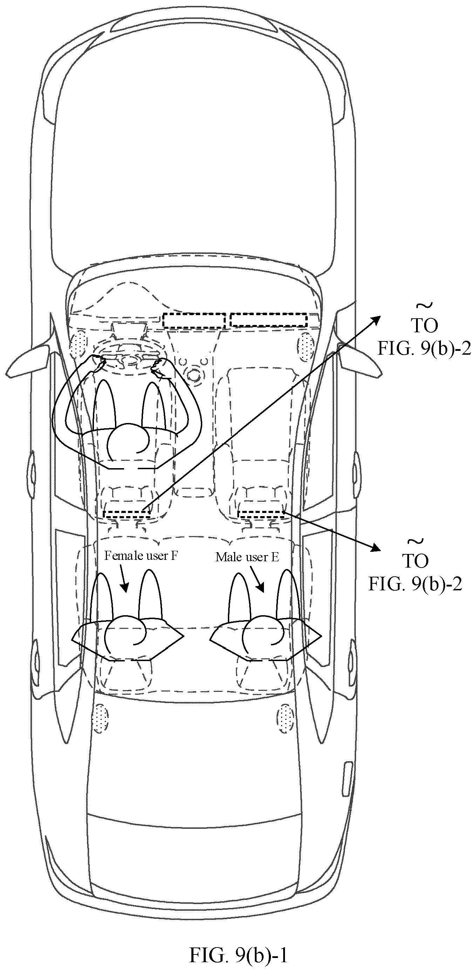

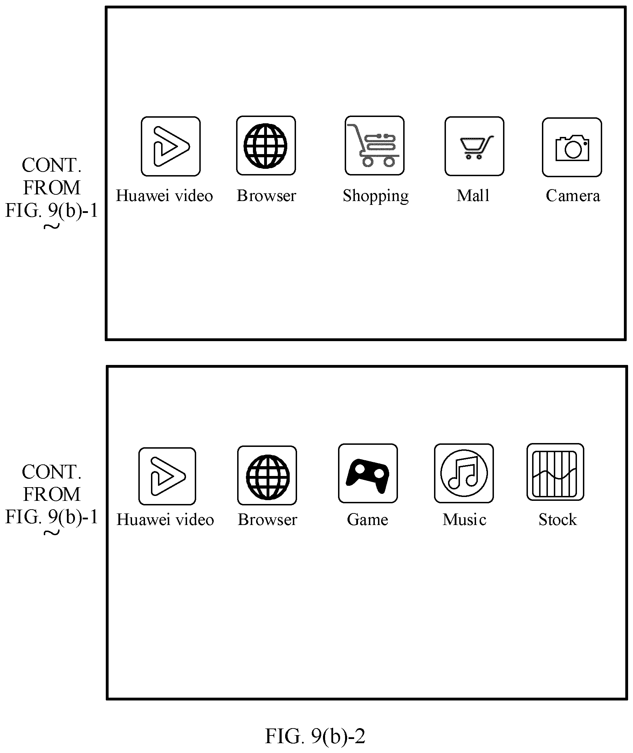

For example, as shown in FIG. 9(a)-1 to FIG. 9(b)-2 or FIG. 10(a)-1 to FIG. 10(b)-2, when it is detected that a user is in location at a location corresponding to a screen on the rear of a head restrain of a driver, if the user is a male user (or a juvenile user), the screen on the rear of the head restrain of the driver is controlled to display an icon of an application preferred by the male user (or the juvenile user) from a screen-off interface or a sleep display interface; or if the user is a female user (or an elderly user), the screen on the rear of the head restrain of the driver is controlled to display an icon of an application preferred by the female user (or the elderly user) from a screen-off interface or a sleep display interface.

For example, a type of a displayed icon of an application is determined with reference to a correspondence, between identity information of a user and an application, shown in Table 3. For example, if the user A is detected in a driver area, a central display screen in the driver area may be controlled to display an icon of the application 1, an icon of the application 2, and an icon of the application 3 from a screen-off interface or a sleep display interface.

In some possible implementations, when the first display area is the screen for the driver, for example, the screen 201 shown in FIG. 2, the first area may be all areas in the cabin in the vehicle. Further, when a user is detected in any area in the cabin, the screen for the driver is controlled to switch from the screen-off interface or the sleep display interface to displaying the interface element. In some possible implementations, when a user is detected in any area in the cabin, the screen for the driver is controlled to switch from the screen-off interface or the sleep display interface to displaying icons of all applications installed on the vehicle.

In some possible implementations, when the first area is one of the front passenger area, the left area in the second row in the vehicle, and the right area in the second row in the vehicle, in addition to the screens 202, 203, and 204 that respectively correspond to the foregoing areas, the first display area further includes the screen 201. To be specific, when the first area is the front passenger area, the first display area is the screen 201 and the screen 202; or when the first area is the left area in the second row in the vehicle, the first display area is the screen 201 and the screen 203; or when the first area is the right area in the second row in the vehicle, the first display area is the screen 201 and the screen 204.

For example, when a user is detected in the front passenger area, the screen 201 and the screen 202 are controlled to switch from a screen-off interface or a sleep display interface to displaying an interface element; or when a user is detected in the left area in the second row in the vehicle, the screen 201 and the screen 203 are controlled to switch from a screen-off interface or a sleep display interface to displaying an interface element; or when a user is detected in the right area in the second row in the vehicle, the screen 201 and the screen 204 are controlled to switch from a screen-off interface or a sleep display interface to displaying an interface element. The screen 201 may display the icons of all the applications installed on the vehicle, and interface elements displayed on the screen 202 to the screen 204 may be determined based on human body features or identity information of users.

In the display control method provided in this embodiment of this application, after the user is detected, the in-vehicle screen corresponding to the area in which the user is located or the area on the in-vehicle screen displays the interface element. This helps reduce energy consumption and improve interaction experience when the user uses the in-vehicle screen. In addition, when users are detected in different areas in the cabin, different display areas may display different interface elements, to meet requirements of different users.

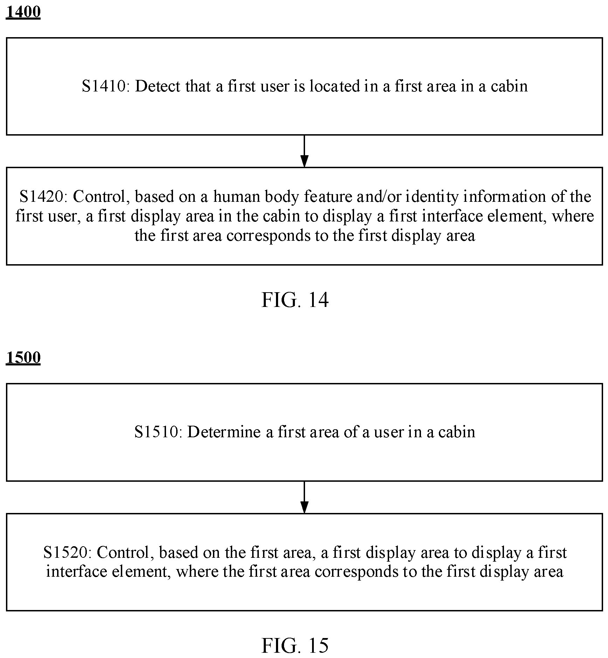

FIG. 14 is a schematic flowchart of a display control method 1400 according to an embodiment of this application. The method 1400 is applied to the vehicle 100 shown in FIG. 1, and the method may be performed by the systems shown in FIG. 3(a) to FIG. 3(c). Steps or operations of the display control method shown in FIG. 14 are merely examples. In embodiments of this application, other operations or variations of the operations in FIG. 14 may be performed. The method 1400 includes the following steps.

S1410: Detect that a first user is located in a first area in a cabin.

For example, for a specific method for detecting whether there is the user in the first area in the cabin, refer to the description in the foregoing embodiment. Details are not described herein again.

For example, the first area may be the driver area in the foregoing embodiment, and a first display area may be a screen for a driver in the foregoing embodiment, for example, the screen 201 shown in FIG. 2. It should be understood that the first area may alternatively be another area in the cabin, and the first display area may alternatively be another display corresponding to the first area or an area on the display. For a specific correspondence, refer to the description in the foregoing embodiment. Details are not described herein again.

S 1420: Control, based on a human body feature or identity information of the first user, the first display area in the cabin to display a first interface element, where the first area corresponds to the first display area.

For example, the human body feature may be described in the foregoing embodiment, and includes but is not limited to a gender, an age, a mood, and the like.

For example, the identity information may be described in the foregoing embodiment, and includes but is not limited to biometric feature information, an account, and the like stored in a vehicle. The biometric feature information includes but is not limited to fingerprint information, palm print information, face information, iris information, and gait information. The account may include account information for logging in to an in-vehicle infotainment system, and the like.

For example, for a specific method for controlling, based on the human body feature of the first user, the first display area in the cabin to display the first interface element, refer to the embodiments corresponding to FIG. 9(a)-1 to FIG. 10(b)-2.

For example, as shown in FIG. 9(a)-1 to FIG. 9(b)-2 or FIG. 10(a)-1 to FIG. 10(b)-2, when it is detected that a user is in location at a location corresponding to a screen on the rear of a head restrain of a driver, if the user is a male user (or a juvenile user), the screen on the rear of the head restrain of the driver is controlled to display an icon of an application preferred by the male user (or the juvenile user); or if the user is a female user (or an elderly user), the screen on the rear of the head restrain of the driver is controlled to display an icon of an application preferred by the female user (or the elderly user).

For example, for a specific method for controlling, based on the identity information of the first user, the first display area in the cabin to display the first interface element, refer to the description in the foregoing embodiment.

For example, a type of a displayed icon of an application is determined with reference to a correspondence, between identity information of a user and an application, shown in Table 3. For example, if the user A is detected in a driver area, a central display screen in the driver area may be controlled to display an icon of the application 1, an icon of the application 2, and an icon of the application 3.

In the display control method provided in this embodiment of this application, a type of an interface element may be determined based on a human body feature or identity information of a user, that is, personalized interface elements are recommended based on different users. This helps improve interaction experience, driving experience, and entertainment experience of the user.

In some possible implementations, when the first area is one of a front passenger area, a left area in a second row in the vehicle, and a right area in the second row in the vehicle, in addition to screens 202, 203, and 204 that respectively correspond to the foregoing areas, the first display area further includes a screen 201. To be specific, when the first area is the front passenger area, the first display area is the screen 201 and the screen 202; or when the first area is the left area in the second row in the vehicle, the first display area is the screen 201 and the screen 203; or when the first area is the right area in the second row in the vehicle, the first display area is the screen 201 and the screen 204.

For example, when a user is detected in the front passenger area, the screen 201 and the screen 202 are controlled to display an interface element; or when a user is detected in the left area in the second row in the vehicle, the screen 201 and the screen 203 are controlled to display an interface element; or when a user is detected in the right area in the second row in the vehicle, the screen 201 and the screen 204 are controlled to display an interface element. The screen 201 may display icons of all applications installed on the vehicle, and interface elements displayed on the screen 202 to the screen 204 may be determined based on human body features or identity information of users.

Optionally, when it is detected that the first user is located in a second area in the cabin, a second display area in the cabin is controlled to display the first interface element, where the second area corresponds to the second display area.

For example, as shown in FIG. 9(a)-1 to FIG. 9(b)-2, when a male user moves from a left side of a second row in a vehicle to a right side of the second row in the vehicle, a screen on the rear of a head restrain of a front passenger is controlled to display an icon of an application preferred by the male user.

Optionally, the first display area in the cabin is controlled, based on travel status information of the vehicle and the human body feature or the identity information of the first user, to display the first interface element, where the vehicle includes the cabin.

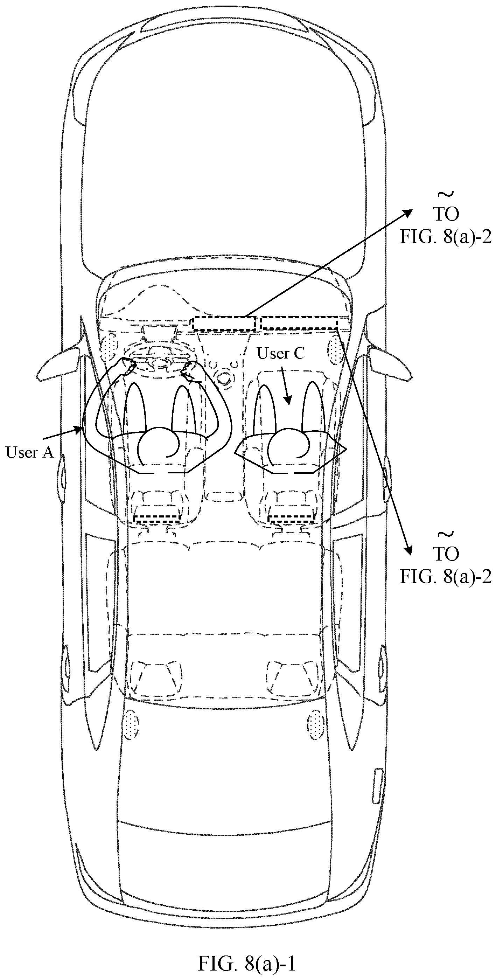

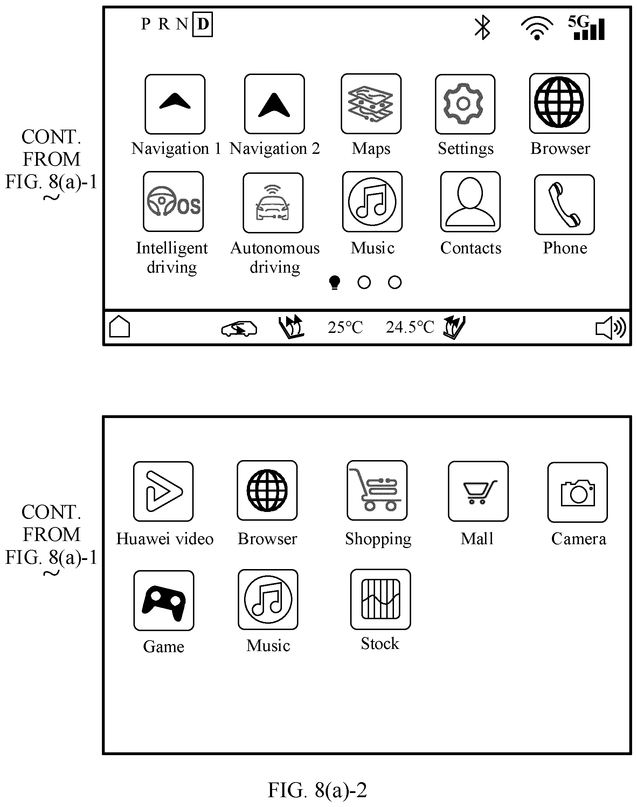

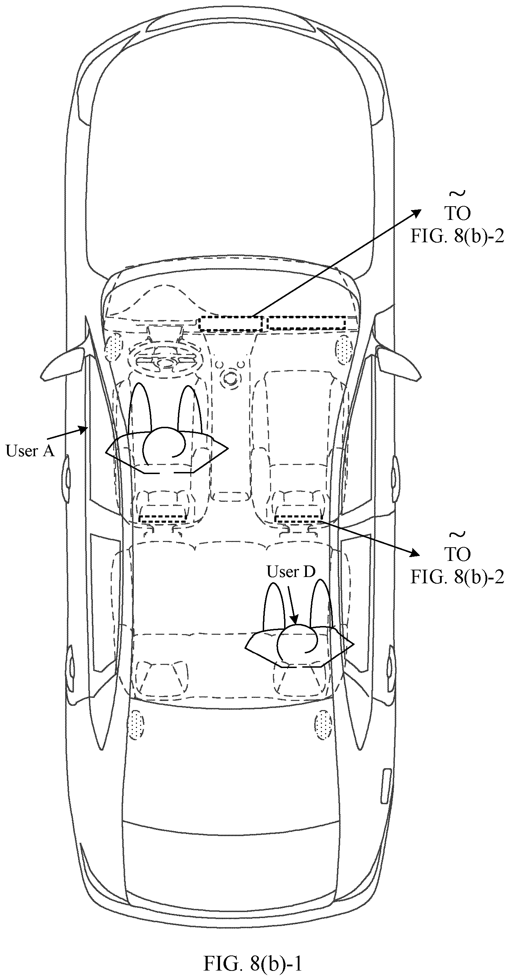

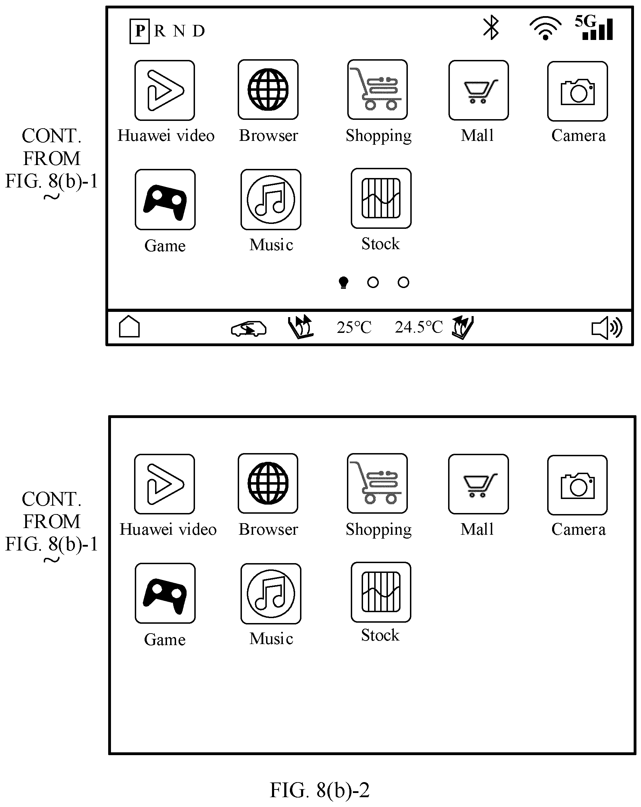

For example, as shown in FIG. 8(a)-1 to FIG. 8(b)-2, when a first user is located in a driver area, when a vehicle is traveling, a screen (for example, a central display screen) corresponding to a driver may be controlled to display an icon of a driving-related application such as a navigation type or a maps type, where the icon of the application may be determined based on a human body feature or identity information of the first user; or when a vehicle is in a parking state, a screen (for example, a central display screen) corresponding to a driver may be controlled to display an icon of an entertainment-type application, where the icon of the application may be determined based on human body feature or identity information of the first user.

Optionally, the method further includes: When it is detected that a second user is located in the second area, the second display area is controlled, based on a human body feature or identity information of the second user, to display a second interface element.

In some possible implementations, when the first user is the same as the second user, the first interface element is the same as the second interface element.

Optionally, the method further includes: When it is detected that the second user is located in the first area and the first user is located in the second area, the first display area is controlled to display the second interface element, and the second display area is controlled to display the first interface element.

Optionally, the method further includes: The first display area is controlled, based on the human body feature or the identity information of the first user, to switch from a screen-off state to displaying the first interface element.

Optionally, the first interface element includes one or more tabs, and the method further includes: When an input of the first user for a first tab displayed in the first display area is detected, the first display area is controlled to display icons of one or more applications, where the one or more tabs include the first tab, and the first tab includes the icons of the one or more applications.

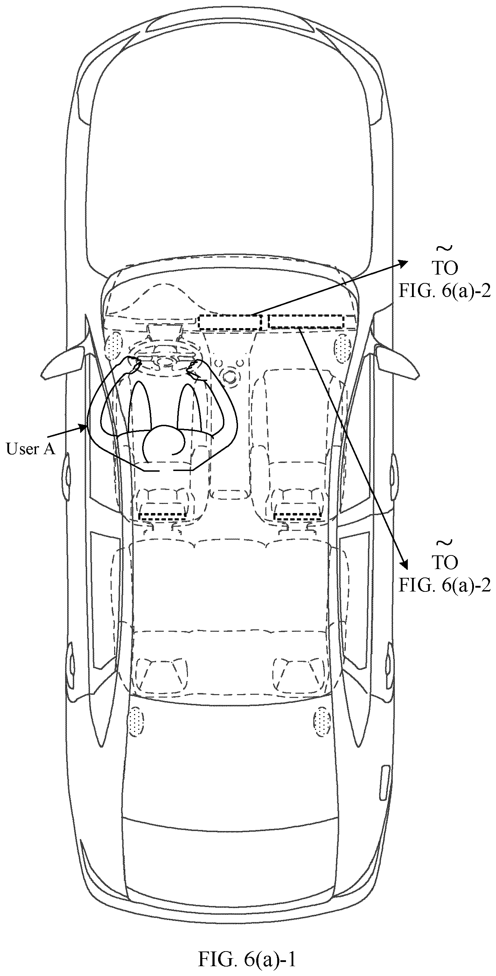

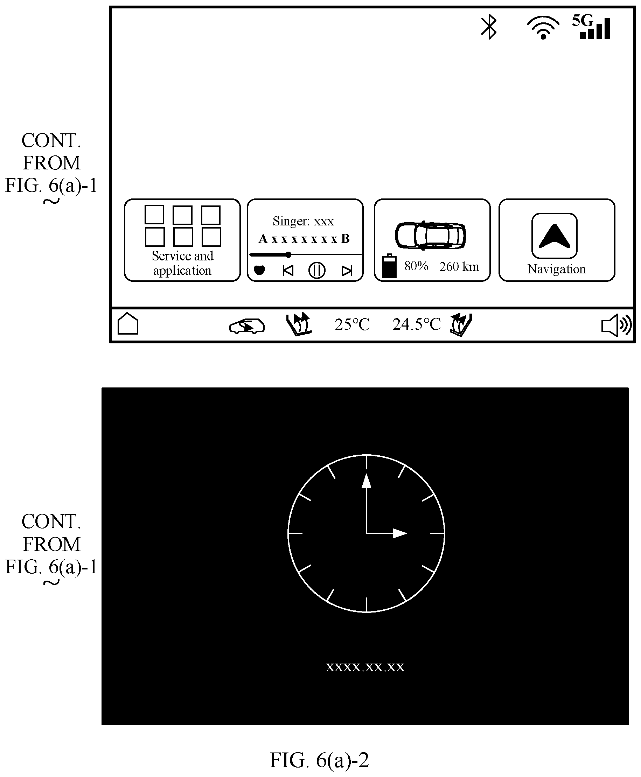

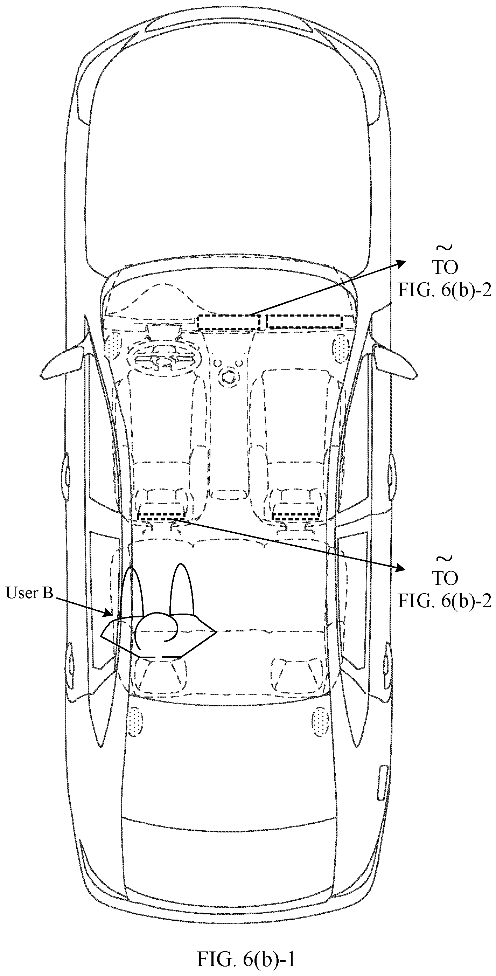

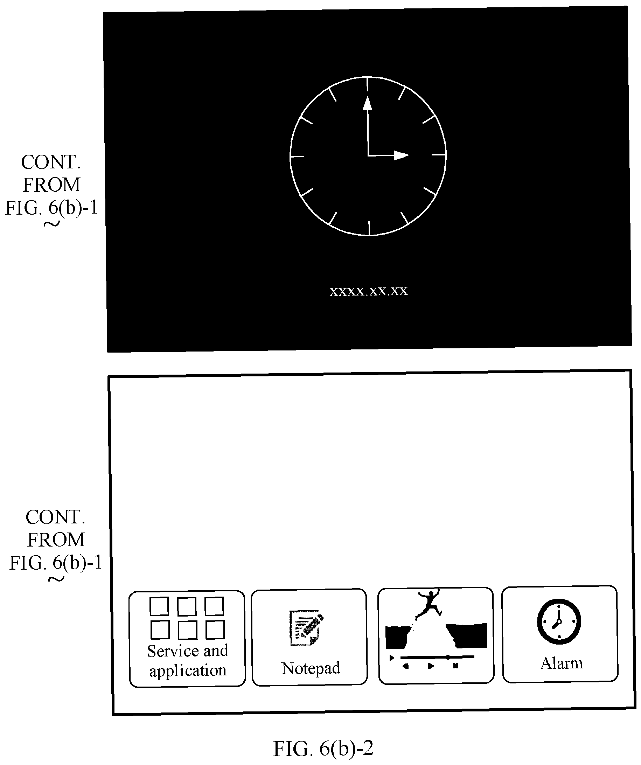

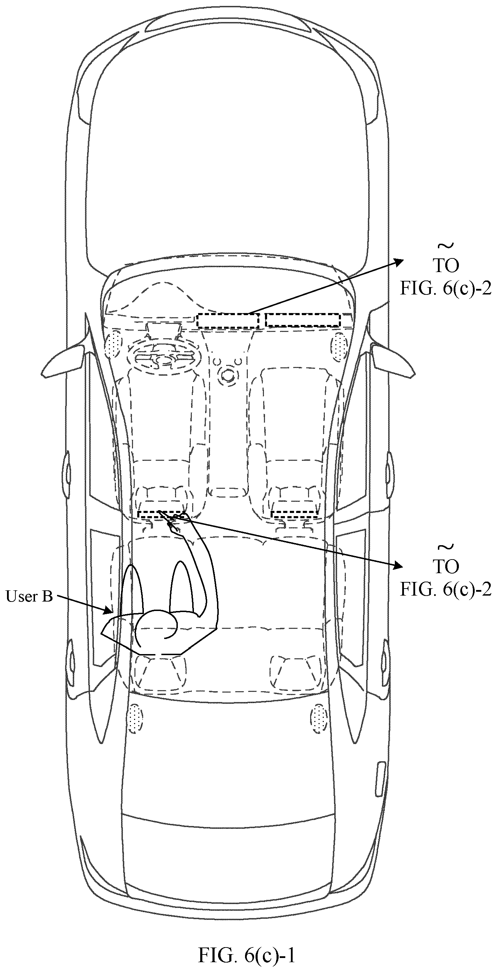

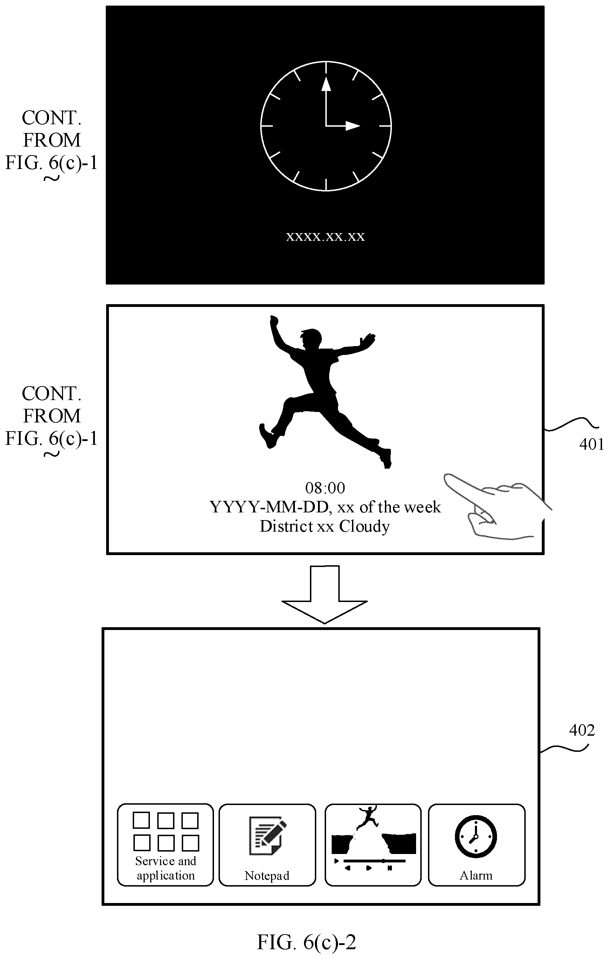

For example, as shown in FIG. 6(a)-1 to FIG. 6(c)-2, when it is detected that there is a user in a front passenger area, a front passenger entertainment screen is controlled to display one or more tabs, and after a user taps one of the tabs, icons of one or more applications included in the tab are displayed.

Optionally, when an input of the first user for the first display area is detected, the first display area is controlled to switch from the screen-off state to displaying the first interface element.

Optionally, the cabin includes a first display, the first display includes the first display area and the second display area, the second display area corresponds to the second area in the cabin, and the method further includes: When no user is detected in the second area, the second display area is controlled to be in a screen-off state; or when a user is detected in the second area, the second display area is controlled to display an interface element.

For example, as shown in FIG. 11(a)-1 to FIG. 11(d)-2, when users are detected in both a driver area and a front passenger area, a display area 1 and a display area 2 each are controlled to display an interface element; or when a user is detected in a driver area and no user is detected in a front passenger area, a display area 1 is controlled to display an interface element, and a display area 2 is controlled to be screen-off; or when a user is detected in the front passenger area and no user is detected in a driver area, a display area 2 is controlled to display an interface element, and a display area 1 is controlled to be screen-off.

FIG. 15 is a schematic flowchart of a display control method 1500 according to an embodiment of this application. The method 1500 is applied to the vehicle 100 shown in FIG. 1, and the method may be performed by the systems shown in FIG. 3(a) to FIG. 3(c). Steps or operations of the display control method shown in FIG. 15 are merely examples. In embodiments of this application, other operations or variations of the operations in FIG. 15 may be performed. The method 1500 includes the following steps.

S1510: Determine a first area of a user in a cabin.

For example, for a specific method for determining the first area of the user in the cabin, refer to the description in the foregoing embodiment. Details are not described herein again.

S1520: Control, based on the first area, a first display area to display a first interface element, where the first area corresponds to the first display area.

For example, "the first area corresponds to the first display area" may include that the first area may be the driver area in the foregoing embodiment, and the first display area may be the screen for the driver (for example, a central display screen) in the foregoing embodiment, for example, the screen 201 shown in FIG. 2, that is, the driver area corresponds to the screen for the driver; that the first area may be the front passenger area in the foregoing embodiment, and the first display area may be the screen for the front passenger seat in the foregoing embodiment, for example, the screen 202 shown in FIG. 2, that is, the front passenger area corresponds to the screen for the front passenger seat; that the first area may be the left area in the second row in the vehicle in the foregoing embodiment, and the first display area may be the screen on the rear of the head restrain of the driver in the foregoing embodiment, for example, the screen 203 shown in FIG. 2, that is, the left area in the second row corresponds to the screen on the rear of the head restrain of the driver; and that the first area may be the right area in the second row in the vehicle in the foregoing embodiment, and the first display area may be the screen on the rear of the head restrain of the front passenger in the foregoing embodiment, for example, the screen 204 shown in FIG. 2, that is, the right area in the second row corresponds to the screen on the rear of the head restrain of the front passenger.

Optionally, when the first display area is a central display screen, the first area is any area in the cabin. That is, all areas in the cabin correspond to the central display screen. For example, when there is a user in any one of a driver area, a front passenger area, and a rear-row area, the central display screen is controlled to display the first interface element.

In some possible implementations, when the first area is one of a front passenger area, a left area in a second row in the vehicle, and a right area in the second row in the vehicle, in addition to screens 202, 203, and 204 that respectively correspond to the foregoing areas, the first display area further includes a screen 201. To be specific, when the first area is the front passenger area, the first display area corresponding to the first area includes the screen 201 and the screen 202; or when the first area is the left area in the second row in the vehicle, the first display area corresponding to the first area is the screen 201 and the screen 203; or when the first area is the right area in the second row in the vehicle, the first display area corresponding to the first area is the screen 201 and the screen 204.

In some possible implementations, when a user is detected in any area in the cabin, the central display screen corresponding to the driver area is controlled to display icons of all applications installed on the vehicle.

Optionally, when the first area is the front passenger area in the cabin or the rear-row area in the cabin, that a first display area is controlled to display a first interface element includes: The first display area is controlled, based on a human body feature of the user, to display the first interface element.

For example, for a specific method for controlling, based on the human body feature of the first user, the first display area in the cabin to display the first interface element, refer to the embodiments corresponding to FIG. 9(a)-1 to FIG. 10(b)-2.

For example, the rear-row area may include the left area in the second row and the right area in the second row in the foregoing embodiment. When the vehicle is a seven-seat SUV, the rear-row area may be a second-row area and/or a third-row area. For another vehicle with many seats, the rear-row area may further include a rear-row area other than a driver area and a front passenger area.

Optionally, when the first area is the front passenger area in the cabin or the rear-row area in the cabin, that a first display area is controlled to display a first interface element includes: The first display area is controlled, based on identity information of the user, to display the first interface element.

For example, for a specific method for controlling, based on the identity information of the first user, the first display area in the cabin to display the first interface element, refer to the description in the foregoing embodiment.

Optionally, the method further includes: When there is no user in the first area, the first display area is controlled to be in a screen-off state.

Optionally, that a first display area is controlled to display a first interface element includes: The first display area is controlled, based on travel status information of a mobile carrier, to display the first interface element, where the mobile carrier includes the cabin.

Optionally, the first interface element includes one or more tabs, and the method further includes: When an input of the user for a first tab displayed in the first display area is detected, the first display area is controlled to display icons of one or more applications, where the one or more tabs include the first tab, and the first tab includes the icons of the one or more applications.

Optionally, the icons of the one or more applications included in the first tab are icons of applications of a same type.

Optionally, the cabin includes a first display, the first display includes the first display area and a second display area, the second display area corresponds to a second area in the cabin, and the method further includes: When no user is detected in the second area, the second display area is controlled to be in a screen-off state; or when a user is detected in the second area, the second display area is controlled to display a second interface element.

In some possible implementations, the first interface element and the second interface element may be a same interface element.

Optionally, the cabin includes a third display area, the third display area corresponds to a third area in the cabin, and the method further includes: When a user is detected in the third area, the third display area is controlled to display a third interface element.

For example, a first area is a driver area, and a third area is a front passenger area. As shown in FIG. 8(a)-1 and FIG. 8(a)-2, when a user A is detected in the driver area, a central display screen (for example, a display 201) is controlled to display a first interface element; and when a user C is detected in the front passenger area, a screen (for example, a display 202) for a front passenger seat is controlled to display a third interface element.

For example, the first area is a driver area, and a third area is a right area in a second row. As shown in FIG. 8(b)-1 and FIG. 8(b)-2, when a user A is detected in the driver area, a central display screen (for example, a display 201) is controlled to display a first interface element; and when a user D is detected in the right area in the second row, a screen (for example, a display 204) on the rear of a head restrain of a front passenger is controlled to display a third interface element.

In some possible implementations, the first interface element and the third interface element may be a same interface element.

Optionally, the first interface element further includes at least one of a widget, an icon of an application, a wallpaper, and an animation.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

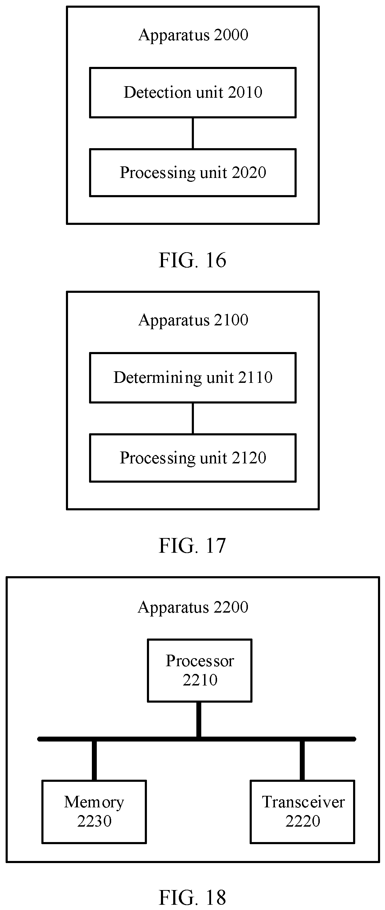

The methods provided in embodiments of this application are described above in detail with reference to FIG. 5(a)-1 to FIG. 5(c)-2 to FIG. 12. Apparatuses provided in embodiments of this application are described below in detail with reference to FIG. 16 to FIG. 18. It should be understood that descriptions of apparatus embodiments correspond to descriptions of method embodiment. Therefore, for content that is not described in detail, refer to the method embodiment. For brevity, details are not described herein again.

FIG. 16 is a block diagram of a display control apparatus 2000 according to an embodiment of this application. The apparatus 2000 includes a detection unit 2010 and a processing unit 2020. The detection unit 2010 may be configured to perform detection and/or implement a corresponding communication function, and the processing unit 2020 is configured to perform data processing. It should be noted that the apparatus 2000 may include one or more of the apparatus 301 to the apparatus 304 in the systems shown in FIG. 3(a) to FIG. 3(c), or may further include an apparatus for controlling a device (for example, an in-vehicle fragrance, an in-vehicle air conditioner, or an in-vehicle audio and video system) other than the apparatus 301 to the apparatus 304. This is not specifically limited in embodiments of this application.

Optionally, the apparatus 2000 may further include a storage unit, where the storage unit may be configured to store instructions and/or data. The processing unit 2020 may read the instructions and/or the data in the storage unit, so that the apparatus implements the foregoing method embodiments.

The apparatus 2000 may include units configured to perform the methods in FIG. 12 to FIG. 14. In addition, the units in the apparatus 2000 and the foregoing other operations and/or functions are separately used to implement corresponding procedures of the method embodiments in FIG. 12 to FIG. 14.

When the apparatus 2000 is configured to perform the method 1100 in FIG. 12, the detection unit 2010 may be configured to perform S1110 in the method 1100, and the processing unit 2020 may be configured to perform S1120 in the method 1100.

Specifically, the apparatus 2000 includes: the detection unit 2010, configured to detect whether there is a user in a first area in a cabin, where the cabin is in a first state; and the processing unit 2020, configured to: when the user is detected in the first area, control the cabin to be in a second state.

In some possible implementations, the cabin includes an in-vehicle fragrance, and that the cabin is in a first state includes that the in-vehicle fragrance is in a release-stopped state; and the processing unit 2020 is specifically configured to: control the in-vehicle fragrance to be on.

In some possible implementations, the cabin includes an in-vehicle air conditioner, and that the cabin is in a first state includes that the in-vehicle air conditioner is in a power-off state; and the processing unit 2020 is specifically configured to: control the in-vehicle air conditioner to be turned on.

In some possible implementations, the cabin includes an in-vehicle audio and video system, and that the cabin is in a first state includes that the in-vehicle audio and video system is in a power-off state; and the processing unit 2020 is specifically configured to: control the in-vehicle audio and video system to be enabled.

In some possible implementations, the detection unit 2010 is further configured to detect whether there is a user in a first area in a cabin, where a first display area in the cabin is in a screen-off state, and the first display area corresponds to the first area; and the processing unit 2020 is configured to: when the user is detected in the first area, control the first display area to switch from the screen-off state to displaying an interface element.

In some possible implementations, the processing unit 2020 is specifically configured to: control, based on a human body feature of the user, the first display area to display the interface element.

In some possible implementations, the processing unit 2020 is specifically configured to: control, based on identity information of the user, the first display area to display the interface element.

In some possible implementations, the processing unit 2020 is specifically configured to: control, based on travel status information of a mobile carrier, the first display area to display the interface element, where the mobile carrier includes the cabin.

In some possible implementations, the interface element includes one or more tabs, and the processing unit 2020 is further configured to: when the detection unit 2010 detects an input of the user for a first tab displayed in the first display area, control the first display area to display icons of one or more applications, where the one or more tabs include the first tab, and the first tab includes the icons of the one or more applications.

In some possible implementations, the one or more applications included in the first tab are applications of a same type.

In some possible implementations, the processing unit 2020 is specifically configured to: when the detection unit 2010 detects an input of the user for the first display area, control the first display area to switch from the screen-off state to displaying the interface element.

In some possible implementations, the cabin includes a first display, the first display includes the first display area and a second display area, the second display area corresponds to a second area in the cabin, and the processing unit 2020 is further configured to: when the detection unit 2010 detects no user in the second area, control the second display area to be in a screen-off state; or when the detection unit 2010 detects a user in the second area, control the second display area to display an interface element.

In some possible implementations, the interface element further includes at least one of a widget, an icon of an application, a wallpaper, and an animation.

In some possible implementations, the apparatus 2000 may alternatively be configured to perform the method 1300 in FIG. 13. When the apparatus 2000 is configured to perform the method 1300 in FIG. 13, the detection unit 2010 may be configured to perform S1310 in the method 1300, and the processing unit 2020 may be configured to perform S1320 in the method 1300.

Specifically, the apparatus 2000 includes: the detection unit 2010, configured to detect whether there is a user in a first area in a cabin, where a first display area in the cabin is in a screen-off state, and the first display area corresponds to the first area; and the processing unit 2020, configured to: when the user is detected in the first area, control the first display area to switch from the screen-off state to displaying an interface element.

In some possible implementations, the processing unit 2020 is specifically configured to: control, based on a human body feature of the user, the first display area to display the interface element.

In some possible implementations, the processing unit 2020 is specifically configured to: control, based on identity information of the user, the first display area to display the interface element.

In some possible implementations, the processing unit 2020 is specifically configured to: control, based on travel status information of a mobile carrier, the first display area to display the interface element, where the mobile carrier includes the cabin.

In some possible implementations, the interface element includes one or more tabs, and the processing unit 2020 is further configured to: when the detection unit 2010 detects an input of the user for a first tab displayed in the first display area, control the first display area to display icons of one or more applications, where the one or more tabs include the first tab, and the first tab includes the icons of the one or more applications.

In some possible implementations, the one or more applications included in the first tab are applications of a same type.

In some possible implementations, the processing unit 2020 is specifically configured to: when the detection unit 2010 detects an input of the user for the first display area, control the first display area to switch from the screen-off state to displaying the interface element.

In some possible implementations, the cabin includes a first display, the first display includes the first display area and a second display area, the second display area corresponds to a second area in the cabin, and the processing unit 2020 is further configured to: when the detection unit 2010 detects no user in the second area, control the second display area to be in a screen-off state; or when the detection unit 2010 detects a user in the second area, control the second display area to display an interface element.

In some possible implementations, the interface element further includes at least one of a widget, an icon of an application, a wallpaper, and an animation.

In some possible implementations, the apparatus further includes: an obtaining unit, configured to obtain resource occupation information, where the resource occupation information represents a resource capacity allocated to the first display area; and the processing unit 2020 is further configured to control, based on the resource occupation information, the first display area to display the interface element.

In some possible implementations, the apparatus 2000 may alternatively be configured to perform the method 1400 in FIG. 14. When the apparatus 2000 is configured to perform the method 1400 in FIG. 14, the detection unit 2010 may be configured to perform S1410 in the method 1400, and the processing unit 2020 may be configured to perform S1420 in the method 1400.

Specifically, the apparatus 2000 includes: the detection unit 2010, configured to detect that a first user is located in a first area in a cabin; and the processing unit 2020, configured to control, based on a human body feature or identity information of the first user, a first display area in the cabin to display a first interface element, where the first area corresponds to the first display area.

In some possible implementations, the processing unit 2020 is further configured to: when the detection unit 2010 detects that the first user is located in a second area in the cabin, control a second display area in the cabin to display the first interface element, where the second area corresponds to the second display area.

In some possible implementations, the processing unit 2020 is further configured to: control, based on travel status information of a mobile carrier and the human body feature or the identity information of the first user, the first display area in the cabin to display the first interface element, where the mobile carrier includes the cabin.

In some possible implementations, the processing unit 2020 is further configured to: when the detection unit 2010 detects that a second user is located in the second area, control, based on a human body feature or identity information of the second user, the second display area to display a second interface element.

In some possible implementations, the processing unit 2020 is further configured to: when the detection unit 2010 detects that the second user is located in the first area and the first user is located in the second area, control the first display area to display the second interface element, and control the second display area to display the first interface element.

In some possible implementations, the processing unit 2020 is specifically configured to: control, based on the human body feature or the identity information of the first user, the first display area to switch from a screen-off state to displaying the first interface element.

In some possible implementations, the first interface element includes one or more tabs, and the processing unit 2020 is specifically configured to: when an input of the first user for a first tab displayed in the first display area is detected, control the first display area to display icons of one or more applications, where the one or more tabs include the first tab, and the first tab includes the icons of the one or more applications.

In some possible implementations, the processing unit 2020 is further configured to: when an input of the first user for the first display area is detected, control the first display area to switch from the screen-off state to displaying the first interface element.

In some possible implementations, the cabin includes a first display, the first display includes the first display area and the second display area, the second display area corresponds to the second area in the cabin, and the processing unit 2020 is further configured to: when no user is detected in the second area, control the second display area to be in a screen-off state; or when a user is detected in the second area, control the second display area to display an interface element.

In some possible implementations, the first interface element further includes at least one of a widget, an icon of an application, a wallpaper, and an animation.

FIG. 17 is a block diagram of a display control apparatus 2100 according to an embodiment of this application. The apparatus 2100 includes a determining unit 2110 and a processing unit 2120.

The apparatus 2100 may include units configured to perform the method in FIG. 15. In addition, the units in the apparatus 2100 and the foregoing other operations and/or functions are separately used to implement a corresponding procedure of the method embodiment in FIG. 15.

The apparatus 2100 includes: the determining unit 2110, configured to determine a first area of a user in a cabin; and the processing unit 2120, configured to control, based on the first area, a first display area to display an interface element, where the first area corresponds to the first display area.

Optionally, the first area is any area in the cabin, and the first display area is a central display screen.

Optionally, the processing unit 2120 is specifically configured to: control, based on a human body feature or identity information of the user, the first display area to display the interface element.

Optionally, the first area is a front passenger area in the cabin or a rear-row area in the cabin.

Optionally, the processing unit 2120 is further configured to: when there is no user in the first area, control the first display area to be in a screen-off state.

Optionally, the processing unit 2120 is specifically configured to: control, based on travel status information of a mobile carrier, the first display area to display the interface element, where the mobile carrier includes the cabin.

Optionally, the apparatus 2100 further includes a detection unit, the interface element includes one or more tabs, and the processing unit 2120 is further configured to: when the detection unit detects an input of the user for a first tab displayed in the first display area, control the first display area to display icons of one or more applications, where the one or more tabs include the first tab, and the first tab includes the icons of the one or more applications.

Optionally, the icons of the one or more applications included in the first tab are icons of applications of a same type.

Optionally, the cabin includes a first display, the first display includes the first display area and a second display area, the second display area corresponds to a second area in the cabin, and the processing unit 2120 is further configured to: when the detection unit detects no user in the second area, control the second display area to be in a screen-off state; or when the detection unit detects a user in the second area, control the second display area to display an interface element.

Optionally, the apparatus further includes the detection unit, the cabin includes a third display area, the third display area corresponds to a third area in the cabin, and the processing unit 2120 is specifically configured to: when the detection unit detects a user in the third area, control the third display area to display an interface element.

Optionally, the interface element further includes at least one of a widget, an icon of an application, a wallpaper, and an animation.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the detection unit 2010 and the processing unit 2020 may be performed by a same processor, or may be performed by different processors, for example, separately performed by a plurality of processors. In an example, one or more processors may be connected to one or more sensors in the sensing system 120 in FIG. 1, and obtain location information of a user in a cabin from the one or more sensors and perform processing. Alternatively, one or more processors may be connected to one or more display devices in the display apparatus 130, to control an icon of an application and/or a widget displayed by the display device. For example, in a specific implementation process, the one or more processors may be a processor disposed in an in-vehicle infotainment, or a processor disposed in another vehicle-mounted terminal. For example, in a specific implementation process, the apparatus 2000 or the apparatus 2100 may be a chip disposed in an in-vehicle infotainment or another vehicle-mounted terminal. For example, in a specific implementation process, the apparatus 2000 or the apparatus 2100 may be the computing platform 150 shown in FIG. 1 disposed in a vehicle. In some possible implementations, the apparatus 2000 or the apparatus 2100 may include at least one of the apparatus 301 to the apparatus 304 shown in FIG. 3(a) to FIG. 3(c).

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, in a specific implementation process, the processing unit may include at least one of the processors 151 to 15n shown in FIG. 1, and the determining unit may include at least one of the processors 151 to 15n shown in FIG. 1. The detection unit may be a specific sensor in the sensing system 120 shown in FIG. 1, or the processors 151 to 15n shown in FIG. 1.

FIG. 18 is a block diagram of a display control apparatus according to an embodiment of this application. The display control apparatus 2200 shown in FIG. 18 may include a processor 2210, a transceiver 2220, and a memory 2230. The processor 2210, the transceiver 2220, and the memory 2230 are connected through an internal connection path. The memory 2230 is configured to store instructions. The processor 2210 is configured to execute the instructions stored in the memory 2230, so that the transceiver 2220 receives/sends some parameters. Optionally, the memory 2230 may be coupled to the processor 2210 through an interface, or may be integrated with the processor 2210.

In some possible implementations, the apparatus 2200 may include at least one of the apparatus 301 to the apparatus 304 shown in FIG. 3(a) to FIG. 3(c).

It should be noted that the transceiver 2220 may include but is not limited to a transceiver apparatus of an input/output interface (input/output interface), to implement communication between the apparatus 2200 and another device or a communication network.

The processor 2210 may be a general-purpose CPU, a microprocessor, an ASIC, a GPU, or one or more integrated circuits, and is configured to execute a related program, to implement the display control methods in method embodiments of this application. Alternatively, the processor 2210 may be an integrated circuit chip, and has a signal processing capability. In a specific implementation process, steps of the display control methods in this application may be completed by using an integrated logic circuit of hardware in the processor 2210 or instructions in a form of software. The processor 2210 may alternatively be a general-purpose processor, a DSP, an ASIC, an FPGA or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly performed by a hardware decoding processor, or may be performed by using a combination of hardware and software modules in the decoding processor. A software module may be located in a mature storage medium in the art, like a random access memory, a flash memory, a read-only memory, a programmable read-only memory, an electrically erasable programmable memory, or a register. The storage medium is located in the memory 2230. The processor 2210 reads information in the memory 2230, and performs, in combination with hardware of the processor, the display control methods in method embodiments of this application.

The memory 2230 may be a read only memory (read only memory, ROM), a static storage device, a dynamic storage device, or a random access memory (random access memory, RAM).

The transceiver 2220 uses a transceiver apparatus, for example, but not limited to a transceiver, to implement communication between the apparatus 2200 and another device or a communication network. For example, user location information may be obtained by using the transceiver 2220.

An embodiment of this application further provides a mobile carrier. The mobile carrier may include the apparatus 2000, the apparatus 2100, or the apparatus 2200.

For example, the mobile carrier may be the vehicle in the foregoing embodiments.

An embodiment of this application further provides a computer program product. The computer program product includes computer program code. When the computer program code is run on a computer, the computer is enabled to perform the methods in FIG. 12 to FIG. 15.

An embodiment of this application further provides a computer-readable storage medium. The computer-readable medium stores program code or instructions. When the computer program code or the instructions are executed by a processor of a computer, the processor is enabled to implement the methods in FIG. 12 to FIG. 15.

An embodiment of this application further provides a chip, including at least one processor and a memory. The at least one processor is coupled to the memory, and is configured to read and execute instructions in the memory to perform the methods in FIG. 12 to FIG. 15.

It should be understood that, for the purpose of convenient and brief description, for a detailed work process and beneficial effect of the foregoing system, apparatus, and unit, refer to a corresponding process in the foregoing method embodiments. Details are not described herein again.

In an implementation process, steps of the foregoing methods may be implemented by using an integrated logic circuit of hardware in the processor or instructions in a form of software. The method disclosed with reference to embodiments of this application may be directly performed by a hardware processor, or may be performed by using a combination of hardware and software modules in the processor. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

Terms used in embodiments of this application are merely for the purpose of describing specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, all or some of the technical solutions of this application may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display control method, comprising:
determining a first area of a user in a cabin; and
controlling, based on the first area, a first display area to display a first interface element, wherein the first area corresponds to the first display area.

2. The method according to claim 1, wherein the first display area is a central display screen, and the first area is any area in the cabin.

3. The method according to claim 1, wherein the controlling a first display area to display a first interface element comprises:
controlling, based on a human body feature or identity information of the user, the first display area to display the first interface element.

4. The method according to claim 3, wherein the first area is a front passenger area in the cabin or a rear-row area in the cabin.

5. The method according to any one of claims 1 to 4, wherein the method further comprises:
when there is no user in the first area, controlling the first display area to be in a screen-off state.

6. The method according to any one of claims 1 to 5, wherein the controlling a first display area to display a first interface element comprises:
controlling, based on travel status information of a mobile carrier, the first display area to display the first interface element, wherein the mobile carrier comprises the cabin.

7. The method according to any one of claims 1 to 6, wherein the first interface element comprises one or more tabs, and the method further comprises:
when detecting an input of the user for a first tab displayed in the first display area, controlling the first display area to display icons of one or more applications, wherein
the one or more tabs comprise the first tab, and the first tab comprises the icons of the one or more applications.

8. The method according to claim 7, wherein the icons of the one or more applications comprised in the first tab are icons of applications of a same type.

9. The method according to any one of claims 1 to 8, wherein the cabin comprises a first display, the first display comprises the first display area and a second display area, the second display area corresponds to a second area in the cabin, and the method further comprises:
when no user is detected in the second area, controlling the second display area to be in a screen-off state; or
when a user is detected in the second area, controlling the second display area to display a second interface element.

10. The method according to any one of claims 1 to 9, wherein the cabin comprises a third display area, the third display area corresponds to a third area in the cabin, and the method further comprises:
when a user is detected in the third area, controlling the third display area to display a third interface element.

11. The method according to any one of claims 1 to 10, wherein the first interface element comprises at least one of a widget, an icon of an application, a wallpaper, and an animation.

12. A display control apparatus, comprising:
a determining unit, configured to determine a first area of a user in a cabin; and
a processing unit, configured to control, based on the first area, a first display area to display a first interface element, wherein the first area corresponds to the first display area.

13. The apparatus according to claim 12, wherein the first display area is a central display screen, and the first area is any area in the cabin.

14. The apparatus according to claim 12, wherein the processing unit is configured to:
control, based on a human body feature or identity information of the user, the first display area to display the first interface element.

15. The apparatus according to claim 14, wherein the first area is a front passenger area in the cabin or a rear-row area in the cabin.

16. The apparatus according to any one of claims 12 to 15, wherein the processing unit is further configured to:
when there is no user in the first area, control the first display area to be in a screen-off state.

17. The apparatus according to any one of claims 12 to 16, wherein the processing unit is configured to:
control, based on travel status information of a mobile carrier, the first display area to display the first interface element, wherein the mobile carrier comprises the cabin.

18. The apparatus according to any one of claims 12 to 17, wherein the apparatus further comprises a detection unit, the first interface element comprises one or more tabs, and the processing unit is further configured to:
when the detection unit detects an input of the user for a first tab displayed in the first display area, control the first display area to display icons of one or more applications, wherein
the one or more tabs comprise the first tab, and the first tab comprises the icons of the one or more applications.

19. The apparatus according to claim 18, wherein the icons of the one or more applications comprised in the first tab are icons of applications of a same type.

20. The apparatus according to any one of claims 12 to 19, wherein the apparatus further comprises the detection unit, the cabin comprises a first display, the first display comprises the first display area and a second display area, the second display area corresponds to a second area in the cabin, and the processing unit is further configured to:
when the detection unit detects no user in the second area, control the second display area to be in a screen-off state; or
when the detection unit detects a user in the second area, control the second display area to display a second interface element.

21. The apparatus according to any one of claims 12 to 20, wherein the apparatus further comprises the detection unit, the cabin comprises a third display area, the third display area corresponds to a third area in the cabin, and the processing unit is further configured to:
when the detection unit detects a user in the third area, control the third display area to display a third interface element.

22. The apparatus according to any one of claims 12 to 21, wherein the first interface element comprises at least one of a widget, an icon of an application, a wallpaper, and an animation.

23. A display control apparatus, comprising:
a memory, configured to store a computer program; and
a processor, configured to execute the computer program stored in the memory, to enable the apparatus to perform the method according to any one of claims 1 to 11.

24. A mobile carrier, comprising the apparatus according to any one of claims 12 to 23.

25. The mobile carrier according to claim 24, wherein the mobile carrier is a vehicle.

26. A computer-readable storage medium, wherein the computer-readable storage medium stores instructions, and when the instructions are executed by a processor, the processor is enabled to implement the method according to any one of claims 1 to 11.

27. A chip, wherein the chip comprises a processor and a data interface, and the processor reads, through the data interface, instructions stored in a memory, to perform the method according to any one of claims 1 to 11.
